(19) Europäisches Patentamt
European Patent Office
Office européen des brevets

(11) EP 0 635 152 B1

(12) **EUROPEAN PATENT SPECIFICATION**

(45) Date of publication and mention of the grant of the patent:
**01.07.1998 Bulletin 1998/27**

(21) Application number: **93906891.2**

(22) Date of filing: **06.04.1993**

(51) Int Cl.6: **G06F 15/80**, G06F 7/60

(86) International application number:
**PCT/JP93/00443**

(87) International publication number:
**WO 93/21598 (28.10.1993 Gazette 1993/26)**

(54) **NEURAL NETWORK/FUZZY CONVERSION DEVICE**

NEURONALES NETZWERK-/ UNSCHARFE LOGIKKONVERTIERUNGSGERÄT.

DISPOSITIF DE CONVERSION RESEAU NEURONAL/LOGIQUE FLOUE

(84) Designated Contracting States:
**DE FR GB IT**

(30) Priority: **09.04.1992 US 866220**

(43) Date of publication of application:
**25.01.1995 Bulletin 1995/04**

(73) Proprietor: **OMRON CORPORATION**
**Kyoto-shi, Kyoto 616 (JP)**

(72) Inventor: **ISAKA, Satoru**
**Santa Clara, CA 95051 (US)**

(74) Representative: **Wilhelms, Rolf E., Dr.**
**WILHELMS, KILIAN & PARTNER**
**Patentanwälte**
**Eduard-Schmid-Strasse 2**
**81541 München (DE)**

(56) References cited:
**EP-A- 0 438 800** **EP-A- 0 471 857**

- **IEEE INTERNATIONAL CONFERENCE ON FUZZY SYSTEMS 8 March 1992, SAN DIEGO , USA pages 1275 - 1282 KAWAMURA 'A prototype of neuro-fuzzy cooperation system'**
- **IJCNN-91 : INTERNATIONAL JOINT CONFERENCE ON NEURAL NETWORKS vol. 2, 8 July 1991, SEATTLE , USA pages 461 - 465 ENBUTSU 'Fuzzy rule extraction from a multilayered neural network'**
- **IEEE INTERNATIONAL CONFERENCE ON NEURAL NETWORKS 8 March 1992, SAN DIEGO , USA pages 485 - 491 HAYASHI 'A neural expert system using fuzzy teaching input'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 635 152 B1

## Description

### FIELD OF THE INVENTION

The present invention relates to a conversion apparatus which converts data expressed as a neural network representation to a relationship of fuzzy variables having the same dynamic content, or which converts data expressed as a relationship of fuzzy variables to a neural network representation with the same dynamic content. This invention also relates to an apparatus that optimizes evaluation functions by searching at high speed for a combination of data which will minimize a previously defined evaluation function.

### DESCRIPTION OF THE PRIOR ART

In a neural network, it is known to employ a learning algorithm known as back propagation to automatically obtain a relationship which exists between input and output. Back propagation is well known in the art. In a system using fuzzy logic, a non-linear relationship can easily be expressed in terms of IF-THEN rules, and membership functions which are comprehensible to humans. Examples of fuzzy algorithms are also well known in the art.

However, several drawbacks are inherent in neural networks and fuzzy logic schemes individually. For example, when a neural network is used exclusively, a long time is required for learning, and sometimes learning is not completed. Furthermore, when a neural network is used exclusively, it is difficult for a human to intuitively understand what method (or rules) are being applied to derive the output which is the result of the learning. On the other hand, when a fuzzy logic scheme is used exclusively, there is no inherent learning algorithm available, like back propagation. Thus, a great deal of trial and error time is required to fine-tune the parameters of the fuzzy rules and membership functions to arrive at a desired output with requisite precision. Furthermore, the exclusive use of a fuzzy logic scheme limits the capability for expressing non-linear functions.

To overcome such inherent drawbacks, attention has focused on combining neural networks and fuzzy logic schemes, since the strengths of one scheme have been found to compensate for the drawbacks of the other. An example of an existing neural network fuzzy conversion device using both a neural network and fuzzy logic is described in the published paper by S. Horikawa, T. Furuhashi, S. Okuma and Y. Uchikawa entitled "A Learning Fuzzy Controller Using a Neural Network" published in Volume 27, No. 2 of the Japanese Proceedings of S.I.C.E. (Society of Instrumentation and Control Engineering) 1991, the subject matter of which is incorporated herein by reference. This device features both a fuzzy calculation device and a neural network which performs the same calculations. Learning is accomplished by means of back propagation.

However, the above neural network-fuzzy conversion device employs both a fuzzy calculation scheme and a neural network which performs the same calculations. As a result, that device's ability to express non-linear functions is only as good as that of the fuzzy logic scheme. This problem is compounded by the limitation that fuzzy logic is less capable of expressing non-linear functions than a neural network alone.

Further drawbacks reside with those devices that are used for optimizing data.

One optimization algorithm, known as the DS (Downhill Simplex) Method, employs an automatic search for a combination of data which will reduce a previously defined evaluation function. However, when the DS Method is used, within the data space to be searched, the result of the search does not always yield the combination of data which will minimize the evaluation function, ( i.e., in a data area with given boundaries, it cannot always find that combination of data which will minimize the evaluation function).

Another optimization algorithm, known as the GA (Genetic Algorithm) Method, is capable of finding, within the data area to be searched, the combination of data which will minimize the evaluation function. However, the time required to locate the optimal combination of data is considerably longer than that required by the DS Method.

IEEE INTERNATIONAL CONFERENCE ON FUZZY SYSTEMS, 8 March 1992, SAN DIEGO, USA, PAGES 1275-1282, KAWAMURA A prototype of neuro-fuzzy cooperation system, discloses implementing knowledge in a fuzzy model format to set initial values a neural network, enhancing fuzzy model precision by neural network learning and interpretating said neural network in the fuzzy model format after learning.

### SUMMARY OF THE INVENTION

In view of the foregoing, it should be apparent that there still exists a need in the art for an apparatus that provides for a conversion of data expressed as a neural network representation to a relationship of fuzzy variables having the same dynamic content, or which can convert data expressed as a relationship of fuzzy variables to a neural network representation with the same dynamic content.

The fuzzy/neural conversion apparatus of the invention includes a neural network device that calculates the output of the neural network at the time data is inputted into the network, and a learning device for the network by which the

neural network learns when it operates exclusively. A fuzzy inference device calculates the output of the fuzzy inference device at the time the same data are inputted into the fuzzy logic device. An input data generator determines a set of data samples to be inputted to both the neural network device and the fuzzy logic device. A setting device is used to set initial conditions for both the neural network and the fuzzy logic devices, which sets initial values for parameters and defines initial structures. A calculation device determines values which represent the accuracy of the approximation between the outputs of the neural network and the fuzzy logic devices. A neural network-to-fuzzy conversion device determines (or adjusts) the parameters of the fuzzy logic device when the data representation is converted from a neural network form to a fuzzy logic form. A fuzzy-to-neural network conversion device calculates (or adjusts) the parameters of the neural network when the data representation is converted from a fuzzy logic form to a neural network form.

With this configuration, the knowledge obtained by human foresight can be reflected in an approximate manner in the fuzzy logic device, and the fuzzy representation can be converted to a neural network representation. As a result, the time required by the neural network for learning is reduced, and the learning can definitely be completed. Furthermore, once the data has been converted to a neural network representation, fuzzy rules and parameters of membership functions can then be fine-tuned automatically by learning. Finally, because a normally structured neural network can be used, the apparatus is able to represent non-linear functions more effectively than is possible when fuzzy logic alone is used. The present invention has the same ability to express non-linear functions as a neural network used by itself.

Once learning has been completed, the neural network representation can be converted into a representation using fuzzy logic. Thus, the product of the neural network's-learning can be converted to fuzzy rules and membership functions, which are easier than the neural network output for human beings to understand intuitively.

Evaluation threshold determining can be provided for setting the evaluation threshold based upon a numbers of learning cycles in the neural network.

In light of the foregoing, one object of the present invention is to provide a neural network apparatus that learns the input-output relationship which occurs when a fuzzy logic scheme is used exclusively.

Another object is to provide a fuzzy logic apparatus that learns the input-output relationship which occurs when a neural network is used exclusively.

Another object of the invention is to provide an apparatus which facilitates conversion between neural and fuzzy forms by randomly choosing the starting point for a search using the DS method, and then repeatedly implementing the DS Method. This device implements an optimization procedure called the Iterated Downhill Simplex Method (IDS). In this apparatus, the initial values of a data series are set as the starting point of a search. A device performs the DS procedure by searching for the combination of data which will minimize an evaluation function. The search commences from a given set of data and continues according to the DS Method. A device is also included that calculates an evaluation value for an evaluation function of the data series, A judgment device then determines whether the DS procedure, used to search for the optimal combination of data, should be performed again or concluded. The effects which can be achieved through the structure described above are: (1) that a combination of data can be found in the data space to be searched which will minimize the evaluative function, and (2) that the time required to search for the optimal combination of data is shorter than that required by the GA Method.

These and other objects, advantages and features of the invention will be more clearly understood by reference to the following detailed description of the invention, provided in connection with the attached drawings,

BRIEF DESCRIPTION OF THE DRAWINGS

Figure 1 is a block diagram of the configuration of the invention in the preferred embodiment;

Figure 2(a) and 2(b) are flow charts that show the order of operations used in the preferred embodiment;

Figure 3(a) shows the structure of the data for parameters $PNN_i$, $PNN_1$ and $PNN_t$ for the neural network memory device;

Figure 3(b) shows the boundary points of fuzzy sets for each input variable;

Figure 4 shows the structure of the data for parameter $PFZ_i$ and $PFZ_t$ for the fuzzy logic scheme;

Figure 5 shows the calculation of the output $YNN_i$ from input $X_i$ in a neural network device;

Figure 6 shows the calculation of the output $YFZ_i$ from input $X_i$ in a fuzzy logic device;

Figures 7(a) and 7(b) respectively shows how the input space of the neural network in Figure 5 and the fuzzy representation in Figure 6 are partitioned;

Figures 8(a), 8(b), 8(c), 8(d) and 8(e) are diagrams useful in explaining operation of the instant invention;

Figure 9 is a hardware block diagram of the device for optimizing the combination of data;

Figure 10 is a flow chart showing the order of operations for performing the IDS steps in the apparatus shown in Figure 9;

Figure 11 is a chart showing the arrangement of data for a data series and evaluation values for the IDS of Figure 9; and

Figure 12 is a graph showing the concepts underlying the DS method.

DETAILED DESCRIPTION OF THE INVENTION

Referring now to the drawings wherein like parts are designated by like reference numerals, Figure 1 shows the configuration of the apparatus of the invention in the preferred embodiment, and Figures 2(a) and 2(b) are flowcharts showing the processing sequence used in the preferred embodiment. The operations shown in the flowcharts may be implemented by computer hardware and/or software and can be applied to numerous environments such as control systems, image processing, sensory sensing, etc.

As shown in Figure 1, the apparatus comprises a computer 150 which contains three devices: a neural network processor (NN Processor) 160, a fuzzy logic processor 170 and a conversion device 180. The computer 150 receives inputs from various input devices 190 (devices 4, 5, 12 and 14). The neural network processor 160 includes a neural network learning device (NN learning device) 2 and a neural network memory device (NN memory device) 1 which together evaluate the neural network algorithms. These devices use algorithms which permit the relationship between input and output to be learned automatically from the input and output data. One example of such a learning algorithm for the neural network is back propagation, which is well known in the art. The fuzzy inference device 3 performs fuzzy algorithms, which are algorithms that are constructed using the knowledge of human beings expressed in IF-THEN rules and membership functions.

More particularly, the neural network memory device 1 in conjunction with the learning device 2, calculates the output (YNNi) of the neural network processor 160 at the time learning data 12 are input into the neural network. A learning device 2 is provided for the neural network to learn the neural network solution when the neural network is used exclusively. The apparatus further includes a fuzzy logic processor 170 which includes a fuzzy inference device 3 that calculates an output (YFZi) at the time fuzzy data 14 are input into the fuzzy processor 170. An input generator 4 is provided which determines a set of data samples (Xi) to be inputted to both the neural network processor 160 and the fuzzy logic processor 170. A device 5 for setting initial conditions for the neural network processor 160 is provided; that device can set initial values for parameters and define initial structures.

The device to set conditions 5 may be a memory, or a software file or a keyboard. Device 5 provides to the computer, from the number of neurons in the medial layer of the neural network, the initial value of the number of membership functions which the fuzzy logic scheme will require for each input variable in order to have the same dynamic character as the neural network representation. These initial parameters ($PNN_i$:initial parameters of the neural network, and $PFZ_i$:initial parameters of the fuzzy system) are pre-set by the operator based on his knowledge of the problem to be solved, and the structure of the given system. Some parameters can be determined automatically as set forth below. The parameters will change during conversion.

The calculation device 6 determines values which evaluate the accuracy of the approximation between the outputs of the neural network 160 and the fuzzy logic device 170. The detailed steps showing the evaluation determination performed by calculation device 6 are shown in Fig. 2(b). The calculation device 6 calculates an evaluation value E. In doing so, device 6 applies an evaluaticn function to each possible output when a given set of data are input to the neural network and the fuzzy logic scheme in order to gauge the conformity between the dynamic character of the neural network representation and that of the fuzzy logic scheme.

A neural network-to-fuzzy conversion device 8 determines (or adjusts) the parameters of the fuzzy logic device when the data representation is converted from a neural network scheme to a fuzzy logic scheme. The neural network-to-fuzzy conversion device 8 dynamically changes the number of membership functions based on the value of the evaluation function and the number of learning cycles (the number of times learning is corrected). This occurs during the determination (or adjustment) of the parameters of the fuzzy logic scheme which is performed during the conversion from the neural network to the fuzzy logic scheme. Further details concerning the operations of the neural network to

fuzzy converter 8 are illustrated in Fig. 2(b) below as steps 270-288 to increase the number of membership functions, to increase the resolution of the decision space and to thus increase the accuracy of the fuzzy solution.

A fuzzy-to-neural network conversion device 7 is as provided which determines (or adjusts) the parameters of the neural network when the data representation is converted from a fuzzy logic scheme to a neural network scheme.

Although the present system 100 may be implemented by discrete hardware devices for each of the block circuits 1, 2, 3, 6, 7, 8, the preferred way of implementing the invention is by a suitable programmed computer 150.

The flowcharts shown in Figs. 2(a) and 2(b) show the steps performed by a programmed computer when implementing the Fig. 1 apparatus and when converting data representations from a fuzzy logic scheme to a neural network scheme, and vice versa.

Neural networks can be represented in many forms, including networks with multiple neuronal layers. Multiple layered networks include input neurons, and output neurons and a layer of medial or "hidden" neurons.

Referring first to Fig. 2(a), after the start at step 200, if data is to be converted from a fuzzy logic form to a neural network form as determined at step 202, then computer 150 sets a flag value equal to "1" at step 204. The initial parameters of the fuzzy inference device 3 $PFZ_i$ are then read into the device to set conditions 5 as the structure of the fuzzy logic scheme at step 206.

The structure of the data for parameter $PFZ_i$ is shown in Figure 4. That data principally consists of input parameters provided by the operator which include the number of input data and number of input membership functions. The output parameters, in turn, include the number of output data and the number of output membership functions. A one-dimensional arrangement of premises and conclusions (IF-THEN rules) is also provided which includes normalized constants for input membership functions and for the inputs $n_i$. The conclusions include coordinate values for output singletons and for outputs.

At step 208, in the device to set conditions 5, the initial parameters of the neural network memory device 1 $PNN_i$ are determined by the following formula, based upon the parameters $PFZ_i$ of the fuzzy inference device 3:

$$pe_1 = n_i$$

$$pe_2 = 2$$

$$pe_3 = n_o$$

$w^1{}_{ij}$, $w^2{}_{jk}$( 2-dimensional arrangement): set at a random number approximating 0 where $pe_1$ equals the number of neurons in the input layer, $n_i$ is the number of inputs into the fuzzy system, $pe_2$ is the number of neurons in the intermediate layer, $pe_3$ is the number of neurons in the output layer, $n_o$ is the number of outputs of the fuzzy system, $w^1{}_{ij}$ is the weight of neurons from neuron number i in the input layer to neuron number j in the medial layer for i = 1, 2,..., $pe_1$ + 1 and j = 1, 2..., $pe_2$; and $W^2{}_{jk}$ is the weight of neurons from neuron number j in the medial layer to neuron number k in output layer for j = 1, 2,..., $pe_2$ + 1 and k = 1, 2,..., $pe_3$, and $W^1{}_{ij}$, $W^2{}_{jk}$ are set at a random number approximating 0.

The structure of the data for parameters $PNN_i$ for the neural network memory device 1 is shown in Figure 3 (a). The section on the scheme used to determine the structure of the neural network and the fuzzy logic representation as discussed below provides the details of the scheme by which the number of neurons $pe_2$ in the medial layer of the neural network is determined.

Next, the parameters $PNN_i$ which have been determined for the neural network memory device 1 are set in that device at step 210. The number of times learning is performed N is set to its initial value by clearing N to 0 at step 212. Then, the number of data i is set to its initial value by clearing i to 0 at step 238. Also at step 238, the number of learning cycles N is incremented. The number of data i is incremented at step 240. At step 242, the input generator 4 determines the input data $X_i$:

$$X_i = x_i1,\ x_i2,\ \ldots,\ x_im,$$

where i = 1, 2, ..., n; where m is the number of inputs.

The procedure to generate a set of data samples consists of the following two steps: In the first step, the boundary points of fuzzy sets for each input variable are determined. The boundary points include the smallest and largest points for each fuzzy set whose membership values are 1, as well as, the points whose membership values are 0.5. These two cases are depicted in Figures 3(b). Second, the intersections of all the boundary points for all the input variables

are collected. Hence, the i-th input data set $X_i$, can be obtained as

$$X_i = x_{1i}, x_{2i}, x_{3i} \ldots, x_{mi}$$

where i = 1, 2, ..., N, $x_{ji}$ is the i-th boundary point for the j-th input variable and m is the number of inputs. N is the total number of samples which is determined by

$$N = n_1 \times n_2 \times \ldots \times n_m,$$

where $n_i$ is the number of boundary points for the i-th input variable.

At steps 244 and 252, the input data $X_i$ are set in the neural network memory device 1 and the fuzzy inference device 3.

The number of intermediate nodes is iteratively incremented from a small integer (e.g. 1) up to the following upper bound value:

$$N^{max} = p_1 + p_2 + \ldots + p_m,$$

where $p_i$ is the number of fuzzy set segments for this i-th input variable and m is the number of inputs.

The number of segments is determined by the "edges" of fuzzy sets as depicted in Figure 3(b). The number of intermediate nodes is thus bounded as:

$$1 \leq N_h \leq \sum_{i=1}^{m} p_i,$$

where $N_h$ is the total number of intermediate nodes and h represents hidden nodes, $p_i$ is the number of fuzzy set segments for the i-th input value and m is the number of inputs.

At steps 246 and 254, the neural network memory device 1 calculates the neural network memory result $YNN_i$, and the fuzzy inference device 3 calculates the fuzzy inference result $YFZ_i$. The methods of calculating output data $YNN_i$ and $YFZ_i$ from input data $X_i$ where there occurs a dual input and a single output are shown below and are also illustrated in Figures 5 and 6. Figure 5 shows the order for a neural network, while Figure 6 shows a fuzzy representation.

The fuzzy inference result $YFZ_i$ is first calculated by evaluating the sum of the outputs for the medial layer of neurons (j) corresponding to input data (i) such that

$$h_{ij} = f\left\{ \sum_{k=1}^{2} W^1_{kj} X_{ik} + W^1_{3j} \right\}$$

where $X_{ik}$ is equal to the i-th input data for input number k (where k = 1, 2 ..., m) and $W^1_{kj}$ is the weight of neurons from neuron No. k in the input layer to neuron No. j in the medial layer and $f(\varepsilon) = 1/\{1 + e^{-\varepsilon}\}$ where ε represents a dummy variable for the squashing function which converts real numbers into real values between 0 and 1.

The medial layer value is then used to evaluate the neural network result $YNN_i$ by calculating the output layer result and the neural layer result:

$$YNN_i = \sum_{j=1}^{2} W^2{}_{ji} \cdot h_{ij} + W^2{}_{31}$$

The fuzzy inference result $YFZ_i$ is calculated by first determining the weight $W_{ijk}$ of $S_{jk}$ which is the coordinate value of the output singleton corresponding to the membership function for the output 1 no. j and output 2 no. k.

$$W_{ijk} = \mathrm{Min}\{\mu_1(x_{ij}), \mu_2(x_{ik})\}$$

where $X_{ik}$ = input data for input k no. i (k=1,2,...,m) and $\mu_k$ $(X_{ik})$ is the membership function value for input data for input k no. i. The fuzzy output value is then determined for the example shown in Fig. 6 as:

$$YFZ_i = \frac{\left\{\sum_{j=1}^{3} \sum_{k=1}^{3} Wijk \; Sjk\right\}}{\left\{\sum_{j=1}^{3} \sum_{k=1}^{3} Wijk\right\}}$$

At step 248, the result YNNi is stored in the neural network memory device 1, and $YFZ_i$ is stored in the fuzzy inference device 3. At step 250, the iteration value i is compared to n, so that if i is less than n, steps 240, 242, 244, 246, 248, 252 and 254 are repeated, so that the neural network memory result $YNN_i$ and the fuzzy inference result $YFZ_i$ are calculated n times for each of input data $X_1$ through $X_n$. If i is greater than or equal to n, as determined at step 250, the process proceeds to step 256 in Figure 2(b).

Referring now in detail to Figure 2(b), at step 256, the output data $YFZ_i$ and $YNN_i$ are entered into the device to calculate evaluation values 6. Evaluation value E is then obtained by the designated calculation evaluation device 6. The square error between the neural network memory result $YNN_i$ and the fuzzy inference result $YFZ_i$ is used as the evaluation value E, i.e., $(YNN_i - YFZ_i)^2 = E$. The object of further processing is to correct the parameters $PNN_i$ of the neural network memory device 1 until E approaches 0. The calculation for E described above is:

$$E = \sum_{i=1}^{n} \sum_{r=1}^{m} (YNN_{ir} - YFZ_{ir})^2$$

$m = pe_3 = n_o$: number of data output

If the flag is equal to 1, as determined by step 258, then the calculated evaluation value E is compared to permitted value ENN at step 260. Otherwise, evaluation value E is compared to permitted value EFZ at step 270. The permitted values for ENN and EFZ differ since the final conditions for fuzzy and neural networks may be inherently different.

If the current evaluation value E at step 260 is less than or equal to the permitted evaluation value ENN which was previously set, the processing will end at step 236 since the parameters of the neural network device have been connected to match the fuzzy device. If E is greater than ENN, then at step 262, the remainder is tested to determine if it is zero when the current number of learning cycles N is divided by the number of learning cycles $N_{NN}$ which modifies the number of neurons in the medial layer of the neural network. $N_{NN}$ represents the number of learning cycles and N represents the current cycle. The only way to determine if system has reached the maximum value, is when the remainder is not the predetermined number. The cycle is repeated until the minimum error is achieved at step 260.

If at Step 262, the remainder is zero when N is divided by $N_{NN}$, then at step 268, the number of neurons in the medial layer $p_{e2}$ will be incremented by 1 in the parameters $PNN_i$ of the neural network to ultimately reduce the error and thus increase the accuracy of the approximation of the neural network. The new parameters of the neural network memory device 1 are called $PNN_t$. The structure of the data arrangement in the new parameter set $PNN_t$ is shown in Figure 3(a). At step 266, the new parameters $PNN_t$ of the neural network memory device 1 representing the structure of the neural network are set in the memory device 1. The process of calculating $YNN_i$ and $YFZ_i$ n times and comparing E to ENN is repeated as described previously.

At step 262, if the remainder is not zero when N is divided by $N_{NN}$, then at step 264 the weights of the neural network will be modified in the parameters $PNN_i$ of the neural network memory device 1, and the new parameters of the neural network memory device 1 will be called $PNN_t$. The weights of the neural network memory device 1 are

modified by a sample learning algorithm or by a combination of optimized algorithms. An example of a combination of optimized algorithms, called a simplex scheme, is shown in the published paper "Simplex Method for Function Minimization" by J.A. Nelder and R. Mead published in The Computer Journal Vol. 7, 1967 pp. 308-313.

At step 266, the new parameters $PNN_t$ of the neural network memory device 1 representing the structure of the neural network are set in the memory device 1. The process of calculating $YNN_i$ and $YFZ_i$ n times and comparing E to ENN is repeated.

The flow charts shown in Figs. 2(a) and 2(b) also show the steps for converting data representations from a neural network scheme to a fuzzy logic scheme.

Specifically, after the start at step 200, if data is to be converted from a neural network to a fuzzy scheme, as determined first by step 202, and then by step 214, then at step 216 the flag is set equal to 2.

The initial parameters of the neural network memory device 1 $PNN_i$ are read into the device to set conditions 5 and are set in the neural network learning device 2 at step 218. The structure of the data arrangement for parameters $PNN_i$ is shown in Figure 3(a). The parameter data is set prior to operation in unit 5 by the operator. The parameters include the number of neurons in the input, medial and output layers, and the weights for the input and medial layers.

At step 220, in the device to set conditions 5, the initial parameters for the fuzzy inference device 3 $PFZ_i$ are determined from parameters $PNN_i$ of the memory device according to the following formula:

$$n_i = p_{e1}$$

$$MF_i = p_{e2} + 1$$

$$n_o = p_{e3}$$

$$MF_o = (MF_i)^{ni}$$

where $MF_i$ is the number of input membership functions (MFS) in $PFZ_i$, $MF_o$ is the number of output MFS; $l_k^j$ is the normalized content for MF number k associated with input j; $s^i_{i1,\ i2,...ini}$ is the coordinate values of singletons for conclusions in output i with respect to membership functions number i1 for input 1, number i2 for input 2, number ini for input ini, and $l_k^j$ and $S^i_{i1,\ i2,...ini}$: are previously set at user's discretion.

The structure of the data arrangement for parameters $PFZ_i$ of the fuzzy inference device 3 is shown in Figure 4. The discussion below provides the details of how the number of input membership functions $MF_i$ is determined in the fuzzy scheme.

The parameters $PFZ_i$ which have been determined for the fuzzy inference device 3 are set into that device at step 222. At step 212, the number of learning cycles N is initialized by clearing N to 0. The number of data i is then initialized by clearing i to 0 at step 238. Also at step 238, the number of learning cycles N is incremented. At step 240, the number of data i is incremented. At step 242, the input data $X_i$ are determined by the input generator 4 as follows:

$$X_i = x_i1, x_i2, ..., x_im$$

where i = 1, 2, ..., n, and m is the number of inputs.

The input data $X_i$ are set into the neural network memory device 1, which provides the data for learning device 2, and the fuzzy inference device 3 at steps 244 and 252.

Next, the neural network memory device 1 and neural network learning device 2 calculate the solution provided from the learning calculaticns from the neural network nodes $YNN_i$, and the fuzzy inference device 3 calculates the result of the fuzzy inference operations $YFZ_i$ at steps 246 and 254. The steps for calculating the fuzzy and neural network solutions were previously described above.

At step 256 (Fig. 2(b)) output data $YFZ_i$ and $YNN_i$ are entered into the device to calculate evaluation values 6, and evaluation value E is obtained by the designated calculation device 6 in the manner described previously.

The flag is then tested at step 258. Since a neural network to fuzzy conversion is desired, the flag is set not equal to 1. The evaluation value E is thereby compared to the permitted evaluation value $E_{FZ}$ at step 270. If the currant evaluation value E is less than or equal to the permitted evaluation value EFZ which was set previously, as determined by step 270, and at step 284 the number of membership functions $MF_i$ for each input in parameters $PFZ_i$ of the fuzzy inference device 3 is also equal to 1, then processing will end at step 236.

However, if the current evaluation value E is less than or equal to the permitted evaluation value EFZ, and at step 284, the number of membership functions $MF_i$ for each input in parameters $PFZ_i$ of the fuzzy inference device 3 is not equal to 1, then at step 286 the current parameters $PFZ_i$ of the fuzzy inference device 3 are stored in the neural network-to-fuzzy conversion device 8 and the new parameters of the fuzzy inference device 3 are called $PFZ_t$. The number of membership functions $MF_i$ for each input in the parameters $PFZ_i$ of the fuzzy inference device 3 is decremented at step 288. The structure of the data arrangement for the new parameters $PFZ_t$ is shown in Figure 4.

If learning is completed after corrections have been made to the number of membership functions $MF_i$ for each input, as determined by step 280, then at step 282 the parameters $PFZ_i$ for the fuzzy inference device 3, which were stored at the time that the value $MF_i$ was obtained, will be set in the fuzzy inference device 3 and processing then will come to an end at step 236 (Figure 2(a)). If learning is not completed at the time a corrected value $MF_i$ is obtained in the parameters $PFZ_i$ of the fuzzy inference device 3 for the number of membership functions for each input, then the conversion is not complete since the fuzzy equivalent to an incomplete or non-convergent neural solution is represented. Accordingly, at step 276, new parameters $PFZ_t$ are set in the fuzzy inference device 3. The process of calculating $YNN_i$ and $YFZ_i$ n times and E, and comparing E to EFZ is repeated for a neural network when learning is completed.

If the current evaluation value E is greater than the permitted evaluation value EFZ which was previously set as determined by step 270, and the remainder is zero when the current number of learning cycles N is divided by the number of learning cycles NFZ as determined by step 272, then the number of membership functions $MF_i$ for each input in the parameters $PFZ_i$ of the fuzzy inference device 3 is incremented by one at step 278, and step 280 is performed.

Steps 280, 282 and 276 are then processed in the same manner described above.

If the current evaluation value E is greater than the permitted evaluation value EFZ which was set previously as determined by step 270, and the remainder is not zero when the current number of learning cycles N is divided by the number of learning cycles NFZ, as determined by step 272, then in order to make the evaluation value E approach 0, the normalized constants for the membership functions for each input are modified, as are the coordinate values of the singleton for each output. This occurs within the parameters for the fuzzy inference device 3 at increment t at step 274. The new parameters are stored as $PFZ_t$. The normalized constants for the membership functions for each input to the fuzzy Inference device 3 and the coordinate values of the singleton for each output are modified by a combination of optimized algorithms which are described in detail in Figs. 9-12.

The flow charts shown in Figs. 2(a) and 2(b) also show the steps performed when neural network learning is performed independently. After the start at step 200, if data is not to be converted from a fuzzy scheme to a neural network, as determined by step 202, and if data is not to be converted from a neural network to the fuzzy scheme, as determined by step 214, then whether neural network learning is to be performed independently is determined by step 224. If neural network learning is not to be performed independently then the process immediately ends at step 236. If neural network learning is to be performed independently, then processing proceeds to step 228.

At step 228, the independent learning parameters $PNN_\ell$ of the neural network memory device 1 representing the structure of the neural network are read into the device for setting conditions 5 as the structure of the neural network. Those learning parameters are either pre-chosen by the operator or are precalculated by the computer 150 and prestored in memory 5. The parameters are effectively given fixed values which represent the actual structure of an existing neural network that will not change and that are represented by fuzzy logic. The parameters also are set in the neural network learning device 2. The arrangement of the data for parameters $PNN_\ell$ of the neural network memory device 1 is shown in Figure 3(a).

For the neural network scheme to learn independently, the neural network learning data (input-output data) must be acquired at step 230. At step 232, the neural network learns independently via the neural network learning device 2 using the neural network learning data in a scheme such as back propagation which was described in the Horikawa et al. paper "A Learning Fuzzy Controller Using a Neural Network" incorporated herein by reference. When the neural network device 2 has completed independent learning, the parameters $PNN_1$ of the neural network learning device 2, after learning, are read in as the structure of the neural network and set in the neural network memory device 1 at step 234. Processing then ends at step 236.

In this section, the scheme used to calculate the number of neurons which will be required in the medial layer to create a neural network with the same dynamic character as the fuzzy representation from the number of membership functions which exist for each fuzzy input variable is explained. The scheme used to calculate the number of input variables which will be required to create a fuzzy representation with the same dynamic character as the neural network from the number of neurons in the medial layer of a neural network is also explained.

To calculate the outputs of a neural network and a fuzzy representation, we can treat them as a common entity partition for the input space, and assign the outputs to the partitions. Figure 7 shows how the input space of the neural network in Figure 5 and the fuzzy representation in Figure 6 are partitioned. The following description outlines the scheme used to calculate the outputs of the neural network and the fuzzy representation.

The output of the neural network is calculated by performing the following process. First, the input space is partitioned according to the weight of the neurons in the medial layer, as shown in graph (a) of Figure 7. Specifically in Fig. 5 the weight of nodes $W^1$ are determined by three inputs $X_{i1}$, $X_{i2}$ and a bias. For each input, there are three separate weights $W^1_{11}$, $W^1_{21}$ and $W^1_{31}$ In a two-dimensional case, the linear combination of nodes is always expressed as a linear solution so that the output partition values are a linear combination. In a three dimensional case, the partition would be represented in a plane. Second, a value of 0 or 1 is assigned to each class of partition according to a function of the outputs of the medial layer of neurons. In a very broad sense, for the outputs of the medial neurons, a clustering effect of the input space is seen at 0 or 1. Finally, the neurons in the output layer are used to calculate the output values, according to weights assigned to each class value.

The output of the fuzzy logic scheme is calculated by performing the following process: first, the input space is partitioned according to the membership functions of the premises, as shown in Figure 7(b). In this case, the partition of the input space assumes the form of a lattice orthogonal to the input axis of the input space which follows the general outline of partitioning illustrated in Fig. 3(b). As part of this process, the goodness of fit is calculated for the membership function associated with each premise. This calculation allows us to assign a value of 0 or 1 to each class of the partition. In a broad sense, the goodness of fit to the membership function for each premise shows the effect of clustering the input space at 0 or 1. Next, a rule is used to assign a value to each singleton conclusion in each class. Finally, the goodness of fit of each singleton is considered to be its weight, and the average is found for the weights of the values assigned to all the singletons (the values assigned to all the classes). This average is used as the value of the outputs.

The following section discusses how the structure of the fuzzy logic scheme is determined when the data is converted from a neural network scheme to a fuzzy representation, and how the structure of the neural network is determined when the data is converted from a fuzzy representation to a neural network. In our example of a fuzzy structure, the membership functions associated with the premises for each input are all identical. In the examples shown in Figures 8(a) and 8(b), both the neural network and the fuzzy representation have dual inputs and a single output, and the number of neurons $p_{e2}$ in the medial layer of the neural network is 2.

The structure of the fuzzy logic scheme is determined when the data representation is converted from a neural network scheme to a fuzzy logic scheme by performing the following process. First, the initial value for the number of membership functions $MF_i$ to be associated with the fuzzy premises is set according to the number of neurons $p_{e2}$ in the medial layer of the neural network. In this case, if the neurons in the medial layer intersect virtually orthogonally with a single input axis in the input space, as shown in Figure 8(a), the value of $MF_i$ can be determined by the following formula:

$$MF_i = p_{e2} + 1$$

The initial value for $MF_i$ is the maximum value for the number of functions which will be required to go from a neural network to a fuzzy representation when the input space in the neural network is divided orthogonally to the input axis of the space.

However, there are many cases in which the number of membership functions actually required for the fuzzy premises is not the same as the initial value $MF_i$. For example, in the case illustrated in Figure 8(b), the number of membership functions associated with the fuzzy premises is less than expected, and the fuzzy processing must be shortened. In the case illustrated in Figure 8(c). however, the number of membership functions associated with the fuzzy premises is greater than expected, and we are faced with the problem of how to produce a fuzzy inference with acceptable accuracy.

To address these problems, the number of membership functions associated with the fuzzy premises is modified during fuzzy learning, by virture of the system illustrated in FIGS. 2(a) and 2(b) so that the optimal number of membership functions is determined.

If the fuzzy learning is completed with the number of membership functions associated with fuzzy premises at its initial value, the number of membership functions is reduced at step 276 (Fig. 2(b)) and the fuzzy learning is performed repeatedly. If the fuzzy learning is not completed, or if the value for MF goes to 1 at step 284, the fuzzy learning comes to a halt at step 236 (Fig. 2(a)). The set of fuzzy parameters at the moment when the number of membership functions associated with fuzzy premises has reached its lowest value is taken as the result of fuzzy learning 282.

If the fuzzy learning is not completed with the number of membership functions associated with fuzzy premises at its initial value, the number of membership functions is increased at step 278 and the fuzzy learning is performed repeatedly. The fuzzy learning ceases when it has been completed. The set of fuzzy parameters at the moment when the number of membership functions associated with fuzzy premises has reached its lowest value is taken as the result of fuzzy learning as described above at 282.

Since the above scheme initially sets the number of membership functions MFi associated with fuzzy premises according to the number of neurons $pe_2$ in the medial layer of the neural network, learning can be initiated with this number of membership functions. A value is thus determined, which to a certain extent, takes into consideration the

complexity of clusterings in the input space. In many cases, the above scheme requires fewer learning cycles than one which initiates learning with the number of membership functions to be associated with the fuzzy premises at a value (for example, 2) which has been set previously. It is, of course, equally possible to determine the optimal number of membership functions by initiating learning from a value which has been previously set.

The structure of the neural network is determined when the data representation is converted from a fuzzy scheme to a neural network scheme by performing the fcllowing process.

As can be seen in Figure 7, the divisions of input space in the neural network are expressed in linear form. Thus, it is generally true that a neural network can express the clustering in the input space better than a fuzzy representation can, as can be seen in Figure 8(c). The number cf neurons $pe_2$ in the medial layer of the neural network is set at its minimum unit, 2. The initial value of 2 for the number of medial layer neurons represents virtually the lowest possible level which this value can take. The optimal value for the number of neurons in the medial layer of the neural network is determined by starting with this minimum value and increasing it according to the process explained below.

If the neural network learning is completed with the number of neurons in the medial layer of the neural network at its initial value, the set of parameters of the neural network at that moment is used as the result of neural network learning. If the neural network learning is not completed with the number of neurons in the medial layer of the neural network at its initial value, the number of neurons is increased and the neural network learning is performed repeatedly. The neural network learning ceases when it has been completed. The set of neural network parameters for the number of neurons in the medial layer at that moment is used as the result of learning.

Examples of how to use the invention and its effects are described below.

To convert the data representation from a fuzzy logic scheme to a neural network scheme, a human being first catalogues fuzzy knowledge in a rough way as rules and membership functions. Next, the fuzzy representation is converted to a neural network representation. Finally, the neural network learns independently using the neural network learning data (input-output data). As a result, the neural network can be initialized using fuzzy knowledge crudely entered by a human being. Thus, less time is required for the independent learning of the neural network, and learning can be conclusively finished. Furthermore, in independent learning capabilities of the neural network, the details of the input-output relationship of the system can be obtained from the fuzzy knowledge entered by the human being. The more fuzzy knowledge supplied, the better the relationship can be defined. Thus, the human being is freed from having to depend on trial and error techniques to fine-tune the parameters of the fuzzy knowledge. Finally, the input-output relationship of a neural network can be expressed with greater precision than that of a fuzzy representation. It is thus to the user's advantage to use a neural network for real applications.

To convert the data representation from a neural network to a fuzzy logic scheme, the invention is used as follows: First, the neural network learns independently (see Fig. 2(b), steps 224-234) by using the neural network learning data (step 230, input-output data). Second, the neural network representation is converted to a fuzzy representation steps 214-222 (Fig. 2(b))and steps 256-266 (Fig. 2(b)). As a result, the process of calculating how to get from input to output in a fuzzy system is more comprehensible to a human being than in a neural network. Thus, it is advantageous to convert to a fuzzy system in order to verify the result of learning by the neural network. (This can be used as a way to explicate the results of neural network learning.)

Nemerous applications of the fuzzy/network conversion device are available. An example of one simple application is for providing control to an inverted pendulum. As shown in Fig. 8(d), the control objective is to keep a pendulum 802 at a vertical position (where O = 0) by moving a cart 804 horizontally as indicated by double-arrow 806. More specifically, a control system implementing the present invention is provided and is shown in Fig. 8(e). The position 0 of the pendulum 802 is measured by means of a potentiometer (not shown). A motor 808 is used to control the position of the pendulum 802.

The pendulum position is controlled by fuzzy controller 810 which generates control signal y(t) for the motor 808. The control signal output y(t) is based on an input x(t) which represents the pendulum's position. Although the pendulum controller can be implemented solely as a fuzzy logic device, control tuning for a fuzzy controller is difficult. Accordingly, a fuzzy to neural network conversion device 812, in accordance with the principles of the invention described above, is provided to achieve a tuned control signal that more accurately and efficiently achieves the control objective. In this example, the conversion device 812 receives, as inputs, sample input/output signals 814 from fuzzy controller 810 and controller parameters 816. The conversion device in turn produces tuned control parameters 818 which are then provided as output y(t) to control motor 808.

Referring now to Fig. 9, a device for performing the data optimization process discussed previously is shown. While the data optimization technique shown in Figs. 9-12 may be used (at step 256) with the fuzzy/neural network conversion scheme of the present invention, other data optimization processes also can be employed. The data optimization process also can be applied to other systems and environments. One of the goals of the Iterated Downhill Simplex system is to provide a device to set initial values of a data series as the starting point of a search, to perform the Downhill Simplex procedure to search for the combination of data which will minimize an evaluation function where the search is begun from a given set of data and performed according to the DS Method, to calculate an evaluation

value for an evaluation function of the data series, and to judge whether the DS procedure used to search for the optimal combination of data should be performed again or concluded.

Figure 9 shows how the components 400 are organized. The components shown in Fig. 9 can represent either process steps, as shown in Fig. 10, or can be provided in a single computer, or as several computers. The IDS is composed of a device that sets the initial values 402 of a data series as the starting point of a search and a device to perform the DS procedure 404 that searches for the combination of data which will minimize an evaluation function. The search commences from a given set of data and continues according to the DS method. A device is also included that calculates an evaluation value 406 for an evaluation function 410 of the data series. A judgement device 408 then determines whether the DS procedure used to search for the optimal combination of data should be performed again or concluded. The devices for performing the DS procedures can be embodied either in hardware or in computer software. The goal of the device is to search a data series in order to optimize the combination of the data by minimizing a previously specified evaluation function. The operational steps 500 employed by the device 400 in a programmed computer implementation are described below and are shown in Figure 10.

After the start at step 502, at step 504 the device to set condition 402 (Fig. 9) sets the initial values $X_{oi}$ for the data series to be optimized. Those values are set randomly as follows:

$$X_{oi} = (x_{oi}1, x_{oi}2, ..., x_{oi}m\text{: Initial values of data series no. i}$$

$$i = 1, 2, ..., n \text{ : Order of data series}$$

$$m = n + 1$$

Next, at step 506, the data series set by the condition setting device 402 is designated data series $X_i$ for the device 404 which performs the DS procedure.

$$X_i = (x_i1, x_i2, ..., x_im \text{ : Data series no. i}$$

$$X_i = X_{oi}$$

The arrangement of the data in this data series is shown in Figure 12.

At step 508, the evaluaticn value $E_i$ for data series $X_i$ in the device which performs the DS procedure 404 is calculated by the calculation device 406:

$$E_i = f(X_i) \text{ : Evaluation value for data series Xi}$$

$$f(.) \quad \text{: Evaluation function}$$

At step 510, the data series $X_i$ are rearranged so that they are in descending order of their evaluation value $E_i$.

$$E_1 < E_2 < ... < E_n$$

At step 512, the data series with the largest evaluation value $E_i$ is considered the center of gravity of the other data series.

$$c = \frac{\sum_{i=1}^{n-1} x_i}{n - 1}$$

At step 514, a reversal of the simplex procedure is performed. The data series with the highest evaluation value Xn is moved to the opposite side of the center of balance C.

$$X_r = C + \alpha (C - X_n)$$

$$\alpha > 0$$

At step 516, the evaluation value $E_r$ is then calculated for data series $X_r$ by the calculation device 406 after this data series has been moved.

At step 518, if $E_1 \leq E_r \leq E_{n-1}$ (if the evaluaticn value is small), then $X_r$ is changed to $X_n$ such that $X_n = X_r$ at step 520 (a post-reversal Simplex procedure is used), and the process proceeds to step 538 below.

At step 522, if $E_r < E_1$ (if the evaluation value is very small), then the Simplex procedure is expanded. The distance between data series $X_r$ and center of gravity C is reduced, and $X_{rr}$ is obtained at step 524.

$$X_{rr} = C + \alpha (X_r - C)$$

$$\alpha > 1$$

(If $E_r \geq E_1$, as determined by step 522, the process proceeds to step 534 below.)

At step 526, the evaluation value $E_{rr}$ for the data series $X_{rr}$ after the data series have been moved is calculated by the device 406.

At step 528, if $E_{rr} < E_1$ (the evaluation value has become even smaller), then $X_{rr}$ is changed to $X_n$ such that $X_n = X_{rr}$ at step 530 (a post-expansion Simplex is used). Operations then proceed to step 538:

If $E_{rr} \geq E_1$ at step 528 (if the evaluation value has not gotten quite small), then $X_r$ is changed to $X_n$ such that $X_n = X_r$ at step 532 (a post-inversion Simplex is used). Processing then proceeds to step 538.

If, on the other hand at step 522, $E_r \geq E_1$ and at step 524, if $E_r \geq E_n$ (if the evaluation value has grown larger), then the Simplex is further contracted the distance between data series $X_n$ and center of balance C. $X_c$ is then obtained at step 536:

$$X_c = C + \beta (X_n - C)$$

$$0 < \beta < 1$$

At step 534, if $E_r < E_n$ (the evaluation value is not getting much smaller), then the Simplex is further contracted, the distance between data series $X_r$ and center of balance C is reduced, and $X_c$ is obtained at step 544.

$$X_c = C + \beta (X_r - C)$$

$$0 < \beta < 1$$

At step 546, the evaluation value $E_c$ for the data series $X_c$ after the data series have been moved is calculated by the device 406.

At step 548, if at this time:

$$E_c \leq \mathrm{Min}\,\{E_r, E_n\}$$

the evaluation value has gotten smaller), $X_c$ is changed to $X_n$ such that $X_n = X_c$ at step 550 (a post-contraction Simplex is used), and operation proceed to step 538 below.

If this is not the case (if the evaluation value is greater than min $E_r$, $E_n$), then processing proceeds to step 538.

At step 538, the degree of centralization of all the data series $X_i$ is examined by the judging device 408. If the judging device 408 concludes that the degree of centralizaticn is greater than a given value A as defined by the equation below (if it is not sufficiently centralized), processing then returns to step 510 described above.

$$A < \max_{i=1}^{n} \left( \max_{j=1}^{m} (X_{ij}) \right)$$

Where A is the extent of centralization of all data series $X_i$ needed to conclude one cycle of DS method.

At step 540 the evaluation function of the data series is examined. If it is less than a given value $E_o$ such that $E_i \leq E_o$ (if the optimal solution has been found), the IDS procedure (the entire process) is concluded by judging device 408 at step 542.

If $E_i > E_o$ at step 540 (if the optimal solution has not been found), then processing returns at step 504.

The above is the order of processing used by the device 400 to optimize a combination of data described in this application.

Steps 508 to 538 constitute the processing steps of the DS Method. Most of them are executed by the device 404 to perform the DS procedure and the device 406 to calculate evaluation values.

Generally speaking, the DS Method provides a shorter search time at the cost of not being able to conduct a wide search of the space occupied by the data series. As a result, it is not always able to produce the optimal solution. By adding steps 504, 506 and 540 described above, however, the DS procedure can be applied from various starting points. This results in a DS procedure which can conduct a wide search of the space occupied by the data series. Conducting this type of search greatly increases the probability of finding the optimal solution.

An example of the operations of the DS Method is discussed below such that the number of data series is 3 (n = 3) and the number of data in each series is 2 (n = 2).

The following shows the order of operations used to move data series in the DS procedure.

1) A simplex is formed from data series $X_1$, $X_2$ and $X_3$ (Steps 504, 506).

2) $X_3$, the series with the greatest evaluation value, is removed from consideration, and the center of balance C is found for $X_1$ and $X_2$ (Steps 508-512).

3) The simplex is inverted (data series $X_3$ is moved to $X_r$, the opposite side of center of balance C) (Steps 514-516).

4) If $E_1 \leq E_r \leq E_2$ then the evaluation value is decreasing, $X_r$ is changed to $X_3$ (a post-inversion simplex is used) (Steps 518,520).

5) If $E_r < E_1$ then the evaluation value has gotten extremely small, and the simplex is expanded further (the distance between data series $X_r$ and center of balance C is reduced and the value of $X_{rr}$ is found). If, at this time : $E_{rr} < E_1$ (the evaluation value is still getting smaller), then $X_{rr}$ is changed to $X_3$ (a post-expansion simplex is used). If this is not the case (if the evaluation value is not getting much smaller), then $X_r$ is changed to $X_3$ (a post-inversion simplex is used) (Steps 522, 524 and 526.

6) If $E_2 < E_r$ and $E_1 \leq E_r$, (if the evaluation value is getting large), then the simplex is further contracted (the distance between the data series $X_3$ and the center of balance C is reduced, and the value of $X_c$ is obtained) (Steps 522, 524 and 536). If at this time $E_c \leq E_3$ (If the evaluation value is decreasing), then $X_c$ is changed to $X_3$ (a post-contraction simplex is used) (Step 550). If this is not the case (if the evaluation value is growing larger), $X_r$ is changed to $X_3$ (a post-inversion simplex is used) (Step 538).

7) If $E_2 < E_r$ and $E_r < E_3$ (if the evaluation value is not decreasing much), then the simplex is further contracted (the distance between the data series $X_r$ and the center of balance C is reduced, and the value of $X_c$ is obtained) (step 544). If at this time $E_c \leq E_3$ (if the evaluation value is decreasing), then $X_c$ is changed to $X_3$ (a post-contraction simplex is used) (Step 550). If this is not the case (if the evaluation value is growing larger), $X_r$ is changed to $X_3$ (a post-inversion simplex is used).

By repeating the order of processing described above, the processing moves the simplex in the direction which causes the evaluation value to decrease. When the simplex constricts to a given degree, the DS procedure comes to an end.

The previously described method is illustrated in more detail in Figs. 10-11.

Although only a preferred embodiment is specifically illustrated and described herein, it will be appreciated that

many modifications and variations of the present invention are possible in light of the above teachings and within the purview of the appended claims without departing from the scope of the claims.

## Claims

**1.** An apparatus (100, 150, 190) for automatically converting data describing a neural network to data defining a relationship of fuzzy variables, comprising:

a memory (1) for storing data describing behavior of a neural network;

means (2) for retrieving said stored data describing the behavior of a neural network;

means (5) responsive to said retrieved data for determining initial data defining a relationship of fuzzy variables;

means (14) for applying said fuzzy variables to a fuzzy processor;

means (4) for generating representative input values to said fuzzy processor;

calculation means (6) for evaluating the accuracy of approximation between said neural network and said fuzzy processor; and

neural network to fuzzy conversion means (8) for determining parameters of said fuzzy logic and for dynamically changing a number of membership functions based upon said calculated evaluation approximation such that said neural network representation and said relationship of the fuzzy variables have corresponding dynamic content.

**2.** The apparatus of claim 1, wherein said memory (1) stores initial neural network data, a weight of the neurons in said neural network located between an input layer and a medial layer, a weight of the neurons located between said medial layer and an output layer and the number of neurons in the neural network.

**3.** The apparatus of claim 2, wherein said means (5) responsive to said retrieved data sets initial parameters for fuzzy variables based upon said neural network data stored in said memory, said parameters including the number of fuzzy input membership functions, the number of fuzzy output membership functions, and the coordinate values of singletons for fuzzy conclusions with respect to said output membership functions.

**4.** The apparatus of claim 3, wherein said means (5) responsive to retrieved data includes:

input setting means (5, 220) for setting a number of inputs in said fuzzy system equal to a number of neurons in said neural network;

input membership function adding means (5, 220) for determining said fuzzy input membership functions by adding a constant to said set number of neurons between said input layer and said medial layer;

fuzzy system output setting means (5, 220) for setting the number of outputs for said fuzzy system equal to the number of neurons between said medial layer and said output layer; and

output membership determining means (5, 220) for calculating said membership output functions based upon said input membership functions and said number of inputs.

**5.** The apparatus of claim 4, wherein said means (4) for generating representative input values further comprises:

boundary point determining means (4, 242) for determining the smallest and largest pcints for each fuzzy membership function whose membership values are 1.0 and 0.5;

boundary point collecting means for collecting intersections of all said input values.

**6.** The apparatus of claim 1, further comprising means (3, 254) for generating representative fuzzy output values to

said fuzzy processor (170), wherein said fuzzy output values are generated by evaluating outputs from a medial layer of newrons from said retrieved stored data corresponding to said representative fuzzy input values so that a fuzzy inference result is calculated for each respective input value.

**7.** The apparatus of claim 6, wherein said fuzzy processor (170) provides said fuzzy output values to said calculation means (6) in order to compare a result represented by said fuzzy output value to a predetermined evaluation threshold such that said parameters for said fuzzy variables are modified by said neural network to fuzzy conversion means (8) when said result does not match said evaluation threshold.

**8.** The apparatus of claim 7, further comprising evaluation threshold determining means for setting said evaluation threshold based upon a number of learning cycles in said neural network.

**9.** An apparatus (100, 150, 190) for automatically converting data describing a fuzzy inference to data defining a neural network, comprising:

a memory (14) for storing fuzzy data;

fuzzy inference means (3) for retrieving said stored data describing said fuzzy inference;

means (5) responsive to said retrieved fuzzy inference data for determining a relationship of neural network variables;

means (5) for applying said neural network variables to a neural network processor (160);

evaluating means (6) for evaluating whether said determined neural network is within a specified degree of certainty with respect to a solution for said fuzzy inference; and

fuzzy to neural conversion means (7) for converting said fuzzy parameters to neural network representation of said fuzzy inference data.

**10.** A method for automatically converting data describing a neural network to data defining a relationship of fuzzy variables, the method comprising the steps of:

storing data describing behavior of a neural network; retrieving said stored data describing the behavior of a neural network;
determining, in response to said retrieved data, initial data defining a relationship of fuzzy variables;
applying said fuzzy variables to a fuzzy processor;
generating representative input values to said fuzzy processor;
evaluating the accuracy of approximation between said neural network and said fuzzy processor; and
determining parameters of said fuzzy logic and changing dynamically a number of membership functions based upon said calculated evaluation approximation such that said neural network representation and said relationship of the fuzzy variables have corresponding dynamic content.

**Patentansprüche**

**1.** Vorrichtung (100, 150, 190) zur automatischen Umwandlung von Daten, die ein neuronales Netzwerk beschreiben, in Daten, die eine Beziehung von Fuzzy-Variablen beschreiben, mit

einem Speicher (1) zur Speicherung von Daten, die das Verhalten eines neuronalen Netzwerks beschreiben,
Mitteln (2) zum Wiederauffinden der das Verhalten eines neuronalen Netzwerks beschreibenden gespeicherten Daten,
Mitteln (5), die auf die wiedergewonnenen Daten ansprechen, zur Bestimmung von Anfangsdaten, die eine Beziehung von Fuzzy-Variablen definieren,
Mitteln (14) zum Aufgeben der Fuzzy-Variablen auf einen Fuzzy-Prozessor,
Mitteln (4) zum Erzeugen von charakteristischen Eingangswerten für den Fuzzy-Prozessor,
Berechnungsmitteln (6) zum Auswerten der Annäherungsgenauigkeit zwischen dem neuronalen Netzwerk und dem Fuzzy-Prozessor, und

Neuronalnetzwerk-Fuzzy-Umwandlungsmitteln (8) zur Bestimmung von Parametern der Fuzzy-Logik und zur dynamischen Änderung einer Anzahl von Zugehörigkeitsfunktionen beruhend auf der berechneten Auswertungsannäherung, derart, daß die Neuronalnetzwerksdarstellung und die Beziehung der Fuzzy-Variablen entsprechenden dynamischen Inhalt haben.

**2.** Vorrichtung nach Anspruch 1, wobei der Speicher (1) Anfangsneuronalnetzwerksdaten, ein Gewicht der Neuronen des neuronalen Netzwerks, die zwischen einer Eingangsschicht und einer Mittelschicht liegen, ein Gewicht der Neuronen, die zwischen der Mittelschicht und einer Ausgangsschicht liegen, und die Anzahl von Neuronen in dem neuronalen Netzwerk speichert.

**3.** Vorrichtung nach Anspruch 2, wobei die auf die wiederaufgefundenen Daten ansprechenden Mittel (5) Anfangsparameter für Fuzzy-Variable beruhend auf den Neuronalnetzwerksdaten, die in dem Speicher gespeichert sind, einstellen, wobei die Parameter die Anzahl von Fuzzy-Eingangszugehörigkeitsfunktionen, die Anzahl von Fuzzy-Ausgangszugehörigkeitsfunktionen und die Koordinatenwerte von Singletons für Fuzzy-Schlüsse in Bezug auf die Ausgangszugehörigkeitsfunktionen enthalten.

**4.** Vorrichtung nach Anspruch 3, wobei die auf die wiederaufgefundenen Daten ansprechenden Mittel (5)

Eingangseinstellmittel (5, 220) zum Einstellen einer Anzahl von Eingaben in das Fuzzy-System, die gleich einer Anzahl von Neuronen in dem neuronalen Netzwerk ist,
Eingangszugehörigkeitsfunktionsaddiermittel (5, 220) zur Bestimmung der Fuzzy-Eingangszugehörigkeitsfunktionen durch Addieren einer Konstanten zu der eingestellten Anzahl von Neuronen zwischen der Eingangsschicht und der Mittelschicht,
Fuzzy-Systemausgabeeinstellmittel (5, 220) zum Einstellen der Anzahl von Ausgaben für das Fuzzy-System, die gleich der Anzahl von Neuronen zwischen der Mittelschicht und der Ausgangsschicht ist, und
Ausgangszugehörigkeitsbestimmungsmittel (5, 220) zur Berechnung der Ausgangszugehörigkeitsfunktionen beruhend auf den Eingangszugehörigkeitsfunktionen und der Anzahl von Eingaben enthält.

**5.** Vorrichtung nach Anspruch 4, wobei die Mittel (4) zur Erzeugung charakteristischer Eingangswerte ferner

Grenzpunktbestimmungsmittel (4, 242) zur Bestimmung der kleinsten und größten Punkte für jede Fuzzy-Zugehörigkeitsfunktion, deren Zugehörigkeitswerte 1,0 und 0,5 sind,
Grenzpunktsammelmittel zum Sammeln von Schnitten aller Eingangswerte enthält.

**6.** Vorrichtung nach Anspruch 1, welche ferner Mittel (3, 254) zur Erzeugung von charakteristischen Fuzzy-Ausgangswerten für den Fuzzy-Prozessor (170) aufweist, wobei die Fuzzy-Ausgangswerte durch Auswertung von Ausgaben aus einer Mittelschicht von Neuronen aus den wiederaufgefundenen gespeicherten Daten, die den charakteristischen Fuzzy-Eingangswerten entsprechen, so daß ein Fuzzy-Schlußfolgerungsergebnis für jeden betreffenden Eingangswert berechnet wird, erzeugt werden.

**7.** Vorrichtung nach Anspruch 6, wobei der Fuzzy-Prozessor (170) die Fuzzy-Ausgangswerte an die Berechnungsmittel (6) liefert, um ein durch den Fuzzy-Ausgangswert dargestelltes Ergebnis mit einer bestimmten Auswertschwelle zu vergleichen, so daß die Parameter für die Fuzzy-Variablen durch die Neuronalnetzwerk-Fuzzy-Umwandlungsmittel (8) modifiziert werden, wenn das Ergebnis nicht mit der Auswertschwelle zusammenpaßt.

**8.** Vorrichtung nach Anspruch 7, welche ferner Auswertschwellenbestimmungsmittel zum Einstellen der Auswertschwelle beruhend auf einer Anzahl von Lernzyklen in dem neuronalen Netzwerk aufweist.

**9.** Vorrichtung (100, 150, 190) zur automatischen Umwandlung von Daten, die eine Fuzzy-Schlußfolgerung beschreiben, in Daten, die ein neuronales Netzwerk definieren, mit

einem Speicher (14) zur Speicherung von Fuzzy-Daten,
Fuzzy-Schlußfolgerungsmitteln (3) zum Wiederauffinden der gespeicherten Daten, die die Fuzzy-Schlußfolgerung beschreiben,
Mitteln (5), die auf die wiederaufgefundenen Fuzzy-Schlußfolgerungsdaten ansprechen, zur Bestimmung einer Beziehung von Neuronalnetzwerksvariablen,
Mitteln (5) zum Aufgeben der Neuronalnetzwerksvariablen auf einen Neuronalnetzwerkprozessor (160),
Auswertmitteln (6) zur Auswertung, ob das bestimmte neuronale Netzwerk innerhalb eines spezifizierten Grades von Sicherheit in Bezug auf eine Lösung für die Fuzzy-Schlußfolgerung liegt, und
Fuzzy-Neuronal-Umwandlungmitteln (7) zum Umwandeln der Fuzzy-Parameter in einer Neuronalnetzwerkdarstellung der Fuzzy-Schlußfolgerungsdaten.

**10.** Verfahren zur automatischen Umwandlung von Daten, die ein neuronales Netzwerk beschreiben, in Daten, die eine Beziehung von Fuzzy-Variablen beschreiben, wobei das Verfahren folgende Schritte aufweist:

Speichern von Daten, die das Verhalten eines neuronalen Netzwerks beschreiben;
Wiederauffinden der das Verhalten eines neuronalen Netzwerks beschreibenden gespeicherten Daten;
Bestimmen, ansprechend auf die wiederaufgefundenen Daten, von Anfangsdaten, die eine Beziehung von Fuzzy-Variablen definieren;
Aufgeben der Fuzzy-Variablen auf einen Fuzzy-Prozessor;
Erzeugen von charakteristischen Eingangswerten für den Fuzzy-Prozessor;
Auswerten der Annäherungsgenauigkeit zwischen dem neuronalen Netzwerk und dem Fuzzy-Prozessor; und
Bestimmen von Parametern der Fuzzy-Logik und dynamisches Ändern einer Anzahl von Zugehörigkeitsfunktionen beruhend auf der berechneten Auswertungsannäherung, derart, daß die Neuronalnetzwerksdarstellung und die Beziehung der Fuzzy-Variablen entsprechenden dynamischen Inhalt haben.

**Revendications**

**1.** Dispositif (100, 150, 190) pour convertir automatiquement des données décrivant un réseau neuronal en données décrivant une relation de variables floues, comprenant :

une mémoire (1), pour stocker des données décrivant le comportement d'un réseau neuronal ;
des moyens (2), pour récupérer lesdites données décrivant le comportement d'un réseau neuronal ;
des moyens (5), sensibles auxdites données récupérées, pour déterminer des données initiales définissant une relation de variables floues ;
des moyens (14), pour appliquer lesdites variables floues à un processeur flou ;
des moyens (4), pour générer des valeurs d'entrée représentatives vers ledit processeur flou ;
des moyens de calcul (6), pour évaluer la précision de l'approximation entre ledit réseau neuronal et ledit processeur flou ; et
des moyens de conversion de réseau neuronal en logique floue (8), pour déterminer les paramètres de ladite logique floue et pour modifier de manière dynamique un certain nombre de fonctions d'appartenance, sur la base de ladite approximation d'évaluation calculée, de façon que ladite représentation de réseau neuronal et ladite relation des variables floues aient un contenu dynamique correspondant.

**2.** Dispositif selon la revendication 1, dans lequel ladite mémoire (1) contient des données initiales de réseau neuronal, un poids des neurones dudit réseau neuronal situés entre une couche d'entrée et une couche médiane, un poids des neurones situés entre ladite couche médiane et une couche de sortie et le nombre de neurones dans le réseau neuronal.

**3.** Dispositif selon la revendication 2, dans lequel lesdits moyens (5) sensibles auxdites données récupérées fixent des paramètres initiaux pour des variables floues, sur la base desdites données de réseau neuronal stockées dans ladite mémoire, lesdits paramètres comportant le nombre de fonctions d'appartenance d'entrée floues, le nombre de fonctions d'appartenance de sortie floues et les valeurs de coordonnées de singletons pour conclusions floues concernant lesdites fonctions d'appartenance de sortie.

**4.** Dispositif selon la revendication 3, dans lequel lesdits moyens (5) sensibles aux données récupérées comportent :

des moyens de détermination d'entrée (5, 220), pour fixer un certain nombre d'entrées dudit système flou, égal à un certain nombre de neurones dudit réseau neuronal ;
des moyens d'addition de fonctions d'appartenance (5, 220), pour déterminer lesdites fonctions d'appartenance d'entrée floues en additionnant une constante audit nombre fixé de neurones entre ladite couche d'entrée et ladite couche médiane ;
des moyens de détermination de sortie de système flou (5, 220), pour fixer le nombre de sorties pour ledit système flou égal au nombre de neurones entre ladite couche médiane et ladite couche de sortie ; et
des moyens de détermination d'appartenance de sortie (5, 220), pour calculer lesdites fonctions de sortie

d'appartenance, sur la base desdites fonctions d'appartenance d'entrée et dudit nombre d'entrées.

**5.** Dispositif selon la revendication 4, dans lequel lesdits moyens (4) pour générer des valeurs d'entrée représentatives comprennent en outre :

des moyens de détermination de points limites (4, 242), pour déterminer les plus petits et plus grands points pour chaque fonction d'appartenance floue dont les valeurs d'appartenance sont 1,0 et 0,5 ;
des moyens de collecte de points limites, pour recueillir les intersections de toutes lesdites valeurs d'entrée.

**6.** Dispositif selon la revendication 1, comprenant en outre des moyens (3, 254), pour générer des valeurs de sortie floues représentatives vers ledit processeur flou (170), dans lequel lesdites valeurs de sortie floues sont générées en évaluant les sorties d'une couche médiane de neurones d'après lesdites données stockées récupérées correspondant auxdites valeurs d'entrée floues représentatives, de façon qu'un résultat d'inférence floue soit calculé pour chaque valeur d'entrée respective.

**7.** Dispositif selon la revendication 6, dans lequel ledit processeur flou (170) fournit lesdites valeurs de sortie floues auxdits moyens de calcul (6) pour comparer un résultat représenté par ladite valeur de sortie floue à un seuil d'évaluation prédéterminé, de façon que lesdits paramètres pour lesdites variables floues soient modifiés par ledit réseau neuronal vers les moyens de conversion floue (8), lorsque ledit résultat ne correspond pas audit seuil d'évaluation.

**8.** Dispositif selon la revendication 7, comprenant en outre des moyens de détermination de seuil d'évaluation pour fixer ledit seuil d'évaluation sur la base d'un certain nombre de cycles d'apprentissage dans ledit réseau neuronal.

**9.** Dispositif (100, 150, 190) pour convertir automatiquement des données décrivant une inférence floue en données décrivant un réseau neuronal, comprenant :

une mémoire (14), pour stocker des données floues ;
des moyens d'inférence floue (3), pour récupérer lesdites données stockées décrivant ladite inférence floue ;
des moyens (5), sensibles auxdites données d'inférence floue récupérées, pour déterminer une relation de variables de réseau neuronal ;
des moyens (5), pour appliquer lesdites variables de réseau neuronal variables floues à un processeur de réseau neuronal (160) ;
des moyens d'évaluation (6), pour évaluer si ledit réseau neuronal déterminé se trouve à l'intérieur d'un degré spécifié de certitude concernant une solution pour ladite inférence floue ; et
des moyens de conversion de logique floue en réseau neuronal (7), pour convertir lesdits paramètres flous en représentation de réseau neuronal desdites données d'inférence floue.

**10.** Procédé pour convertir automatiquement des données décrivant un réseau neuronal en données définissant une relation de variables floues, le procédé comprenant les étapes consistant à :

stocker des données décrivant le comportement d'un réseau neuronal ;
récupérer lesdites données stockées décrivant le comportement d'un réseau neuronal ;
déterminer, en réponse auxdites données récupérées, des données initiales définissant une relation de variables floues ;
appliquer lesdites variables floues à un processeur flou ;
générer des valeurs d'entrée représentatives vers ledit processeur flou ;
évaluer la précision de l'approximation entre ledit réseau neuronal et ledit processeur flou ; et
déterminer les paramètres de ladite logique floue et modifier de manière dynamique un certain nombre de fonctions d'appartenance, sur la base de ladite approximation d'évaluation calculée, de façon que ladite représentation de réseau neuronal et ladite relation des variables floues aient un contenu dynamique correspondant.

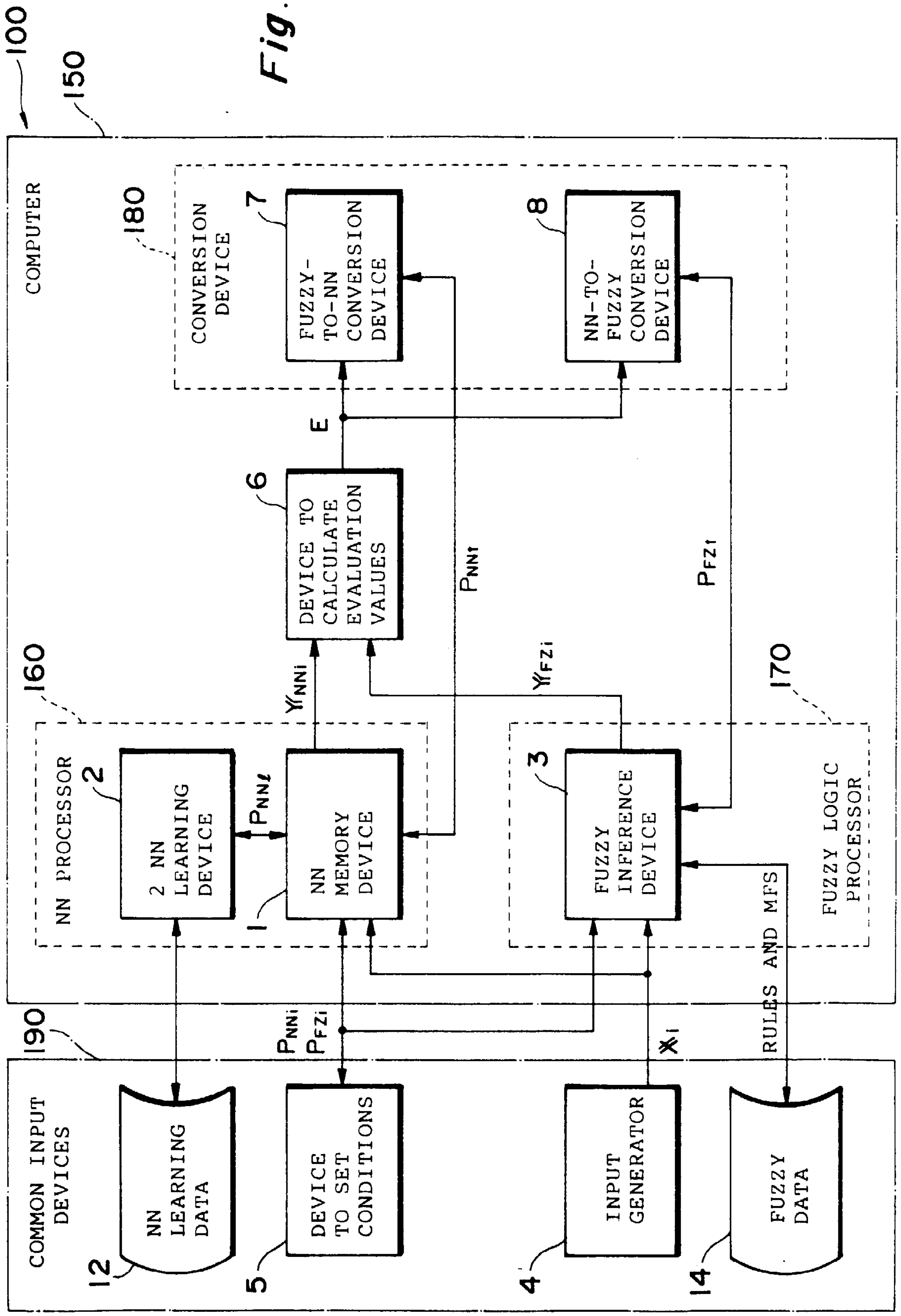
100
150
COMPUTER
180
CONVERSION DEVICE
7
FUZZY-TO-NN CONVERSION DEVICE
8
NN-TO-FUZZY CONVERSION DEVICE
E
6
DEVICE TO CALCULATE EVALUATION VALUES
$P_{NNt}$
$P_{FZt}$
$Y_{NNi}$
$Y_{FZi}$
160
NN PROCESSOR
2
2 NN LEARNING DEVICE
$P_{NN\ell}$
1
NN MEMORY DEVICE
170
3
FUZZY INFERENCE DEVICE
FUZZY LOGIC PROCESSOR
RULES AND MFS
190
$P_{NNi}$
$P_{FZi}$
$X_I$
COMMON INPUT DEVICES
12
NN LEARNING DATA
5
DEVICE TO SET CONDITIONS
4
INPUT GENERATOR
14
FUZZY DATA

Fig. 1

Fig.2(a)

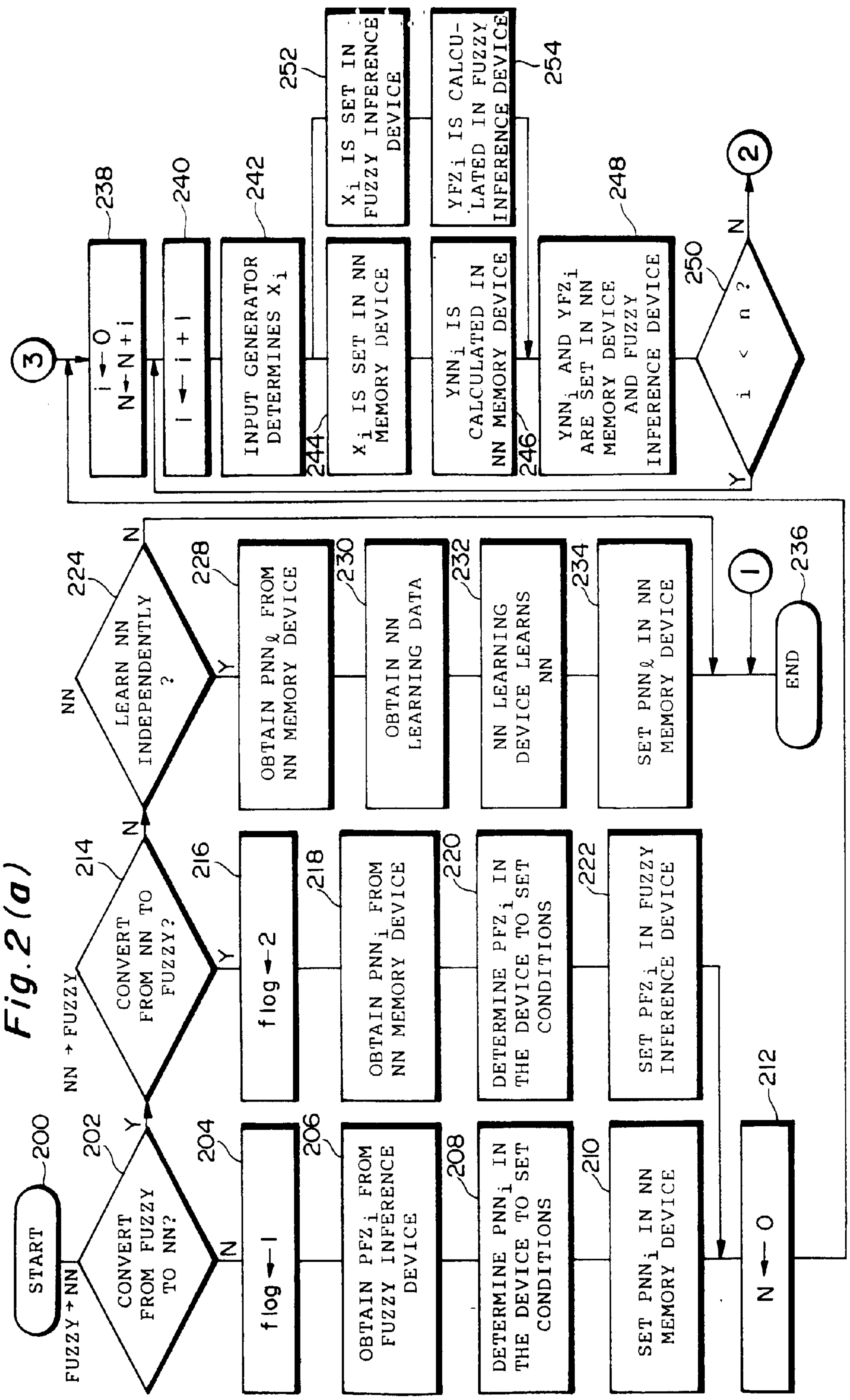
START
200
FUZZY → NN
CONVERT FROM FUZZY TO NN?
202
Y
N
flog ← 1
204
OBTAIN PFZi FROM FUZZY INFERENCE DEVICE
206
DETERMINE PNNi IN THE DEVICE TO SET CONDITIONS
208
SET PNNi IN NN MEMORY DEVICE
210
N ← 0
212
NN → FUZZY
CONVERT FROM NN TO FUZZY?
214
flog ← 2
216
OBTAIN PNNi FROM NN MEMORY DEVICE
218
DETERMINE PFZi IN THE DEVICE TO SET CONDITIONS
220
SET PFZi IN FUZZY INFERENCE DEVICE
222
NN
LEARN NN INDEPENDENTLY ?
224
OBTAIN PNNℓ FROM NN MEMORY DEVICE
228
OBTAIN NN LEARNING DATA
230
NN LEARNING DEVICE LEARNS NN
232
SET PNNℓ IN NN MEMORY DEVICE
234
1
END
236
3
i ← 0
N ← N + i
238
i ← i + 1
240
INPUT GENERATOR DETERMINES Xi
242
Xi IS SET IN NN MEMORY DEVICE
244
Xi IS SET IN FUZZY INFERENCE DEVICE
252
YNNi IS CALCULATED IN NN MEMORY DEVICE
246
YFZi IS CALCULATED IN FUZZY INFERENCE DEVICE
254
YNNi AND YFZi ARE SET IN NN MEMORY DEVICE AND FUZZY INFERENCE DEVICE
248
i < n ?
250
2

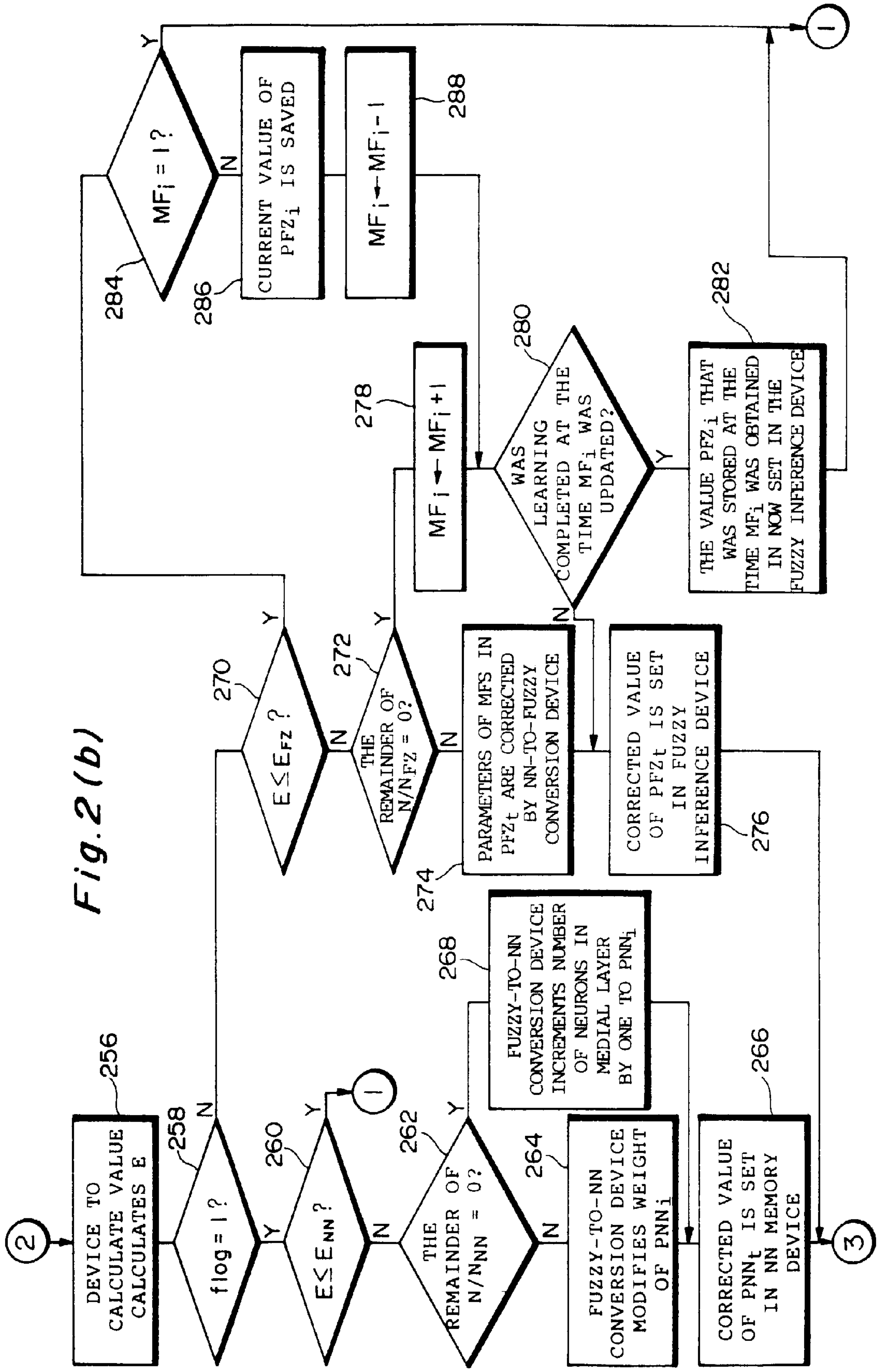
2
DEVICE TO CALCULATE VALUE CALCULATES E
256
flog = 1 ?
258
Y
N
E≤E_NN ?
260
Y
1
N
THE REMAINDER OF N/N_NN = 0?
262
Y
N
FUZZY-TO-NN CONVERSION DEVICE MODIFIES WEIGHT OF PNN_i
264
FUZZY-TO-NN CONVERSION DEVICE INCREMENTS NUMBER OF NEURONS IN MEDIAL LAYER BY ONE TO PNN_i
268
CORRECTED VALUE OF PNN_t IS SET IN NN MEMORY DEVICE
266
3
E≤E_FZ ?
270
Y
N
THE REMAINDER OF N/N_FZ = 0?
272
Y
N
PARAMETERS OF MFS IN PFZ_t ARE CORRECTED BY NN-TO-FUZZY CONVERSION DEVICE
274
CORRECTED VALUE OF PFZ_t IS SET IN FUZZY INFERENCE DEVICE
276
MF_i ← MF_i + 1
278
WAS LEARNING COMPLETED AT THE TIME MF_i WAS UPDATED?
280
Y
N
THE VALUE PFZ_i THAT WAS STORED AT THE TIME MF_i WAS OBTAINED IN NOW SET IN THE FUZZY INFERENCE DEVICE
282
MF_i = 1?
284
Y
N
CURRENT VALUE OF PFZ_i IS SAVED
286
MF_i ← MF_i - 1
288
1

Fig.2(b)

*Fig. 3(a)*

| | | |
|---|---|---|
| NUMBER OF NEURONS | INPUT LAYER | $pe_1 = n_i$ |
| | MEDIAL LAYER | $pe_2$ |
| | OUTPUT LAYER | $pe_3 = n_o$ |
| WEIGHT | FROM INPUT LAYER TO MEDIAL LAYER | $W^1_{11}, W^1_{12}, \cdots, W^1_{1pe2}$<br>$W^1_{21},$<br>$\vdots$<br>$W^1_{pe1+11}, \cdots, W^1_{pe1+1pe2}$ |
| | FROM MEDIAL LAYER TO OUTPUT LAYER | $W^2_{11}, W^2_{12}, \cdots, W^2_{1pe3}$<br>$W^2_{21},$<br>$\vdots$<br>$W^2_{pe2+11}, \cdots, W^2_{pe2+1pe2}$ |

Fig. 3(b)

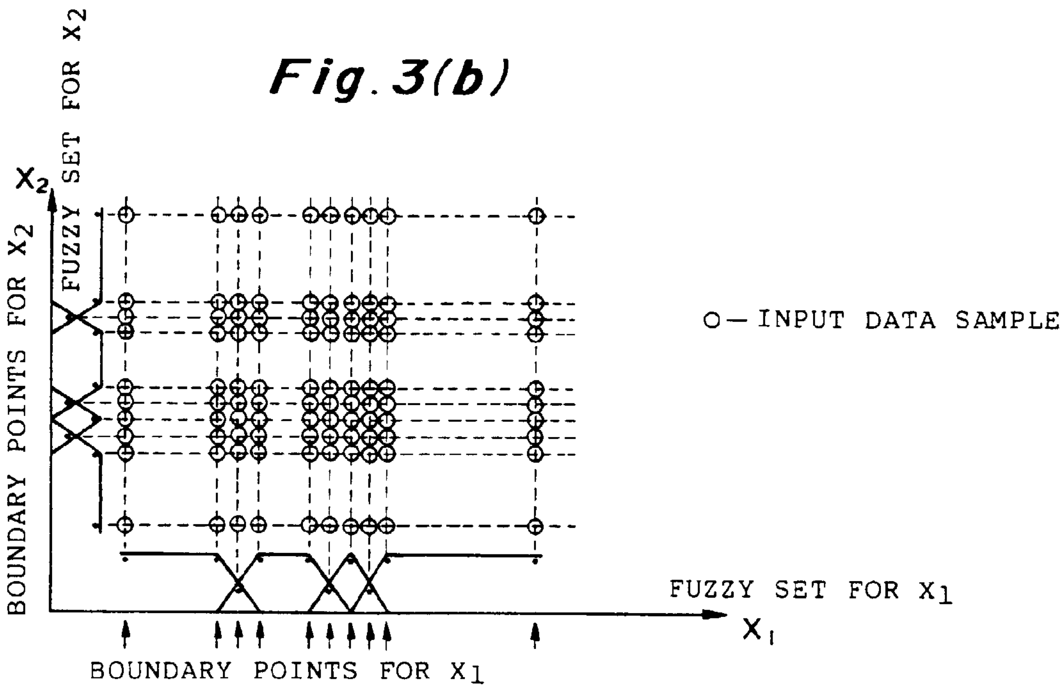
X2
FUZZY SET FOR X2
BOUNDARY POINTS FOR X2
O— INPUT DATA SAMPLE
FUZZY SET FOR X1
X1
BOUNDARY POINTS FOR X1

Fig. 4

| | | |
|---|---|---|
| INPUT | NUMBER OF INPUT DATA | $n_i = pe_1$ |
| | NUMBER OF INPUT MFS | $MF_i$ |
| OUTPUT | NUMBER OF OUTPUT DATA | $n_o = pe_3$ |
| | NUMBER OF OUTPUT MFS | $MF_o$ |
| PREMISES | NORMALIZED CONSTANTS FOR INPUT 1 MFS | $I^1_1, I^1_2, \cdots, I^1_{MFi}$ |
| | ⋮ | ⋮ |
| | NORMALIZED CONSTANTS FOR INPUT $n_i$ MFS | $I^{ni}_1, I^{ni}_2, \cdots, I^{ni}_{MFi}$ |
| CONCLUSIONS | COORDINATE VALUE FOR OUTPUT 1 SINGLETONS | $S^1_{11\cdots1}, S^1_{11\cdots2}, \cdots, S^1_{MFi\,MFi\cdots MFi}$ |
| | ⋮ | ⋮ |
| | COORDINATE VALUE FOR OUTPUT $n_i$ SINGLETONS | $S^{ni}_{11\cdots1}, S^{ni}_{11\cdots2}, \cdots, S^{ni}_{MFi\,MFi\cdots MFi}$ |

$S^i_{i1\,i2\cdots i_{ni}}$: COORDINATE VALUES OF SINGLETONS FOR CONCLUSIONS IN OUTPUT i WITH RESPECT TO MEMBERSHIP FUNCTIONS NUMBER i1 FOR INPUT 1

$i_1, i_2, \cdots, i_{ni} = 1, 2, \cdots, MFi$

$i = 1, 2, \cdots, no$

$(MFi)^{ni} = MFo$

$I^j_k$: NORMALIZED CONSTANTS FOR MF No. k ASSOCIATED WITH INPUT j

$j = 1, 2, \cdots, ni$

$k = 1, 2, \cdots, MFi$

Fig. 5

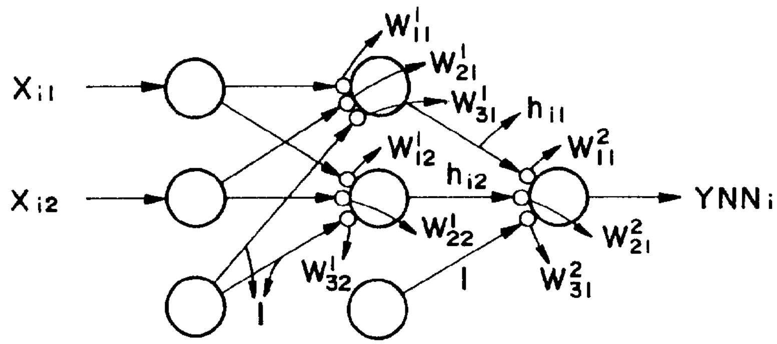


$$YNN_i = \sum_{j=1}^{2} W^2_{j1} hij + W^2_{31}$$

$$hij = f\left\{\sum_{k=1}^{2} W^1_{kj} Xik + W^1_{3j}\right\}$$

$$f(\varepsilon) = \frac{1}{1+e^{-\varepsilon}}$$

Xik : The i-TH INPUT DATA FOR INPUT NUMBER k

$YNN_i$ : The i-TH OUTPUT DATA

hij : OUTPUT OF MEDIAL LAYER NEURON No. j CORRESPONDING TO INPUT DATA No. i

*Fig.6*

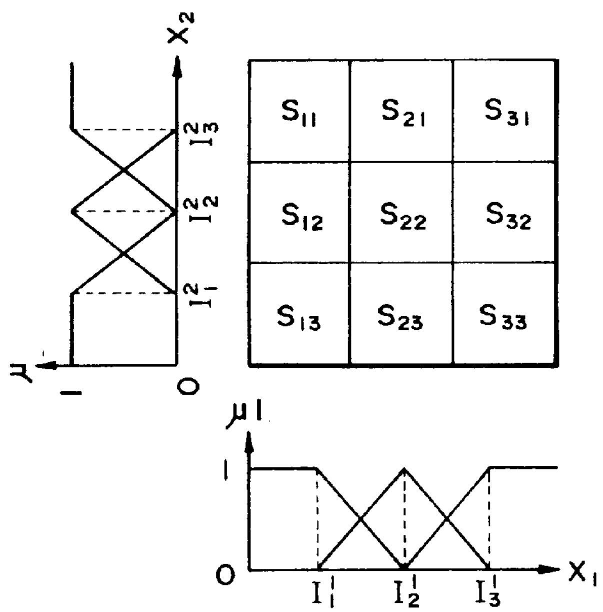


$$YFZ_i = \frac{\left\{\sum_{j=1}^{3}\sum_{k=1}^{3} Wijk\,Sjk\right\}}{\left\{\sum_{j=1}^{3}\sum_{k=1}^{3} Wijk\right\}}$$

$$Wijk = Min\{\mu 1(X_{i1}), \mu 2(X_{i2})\}$$

Xik: INPUT DATA FOR INPUT k No. i (k = 1, 2, ..., m)

$YFZ_i$: OUTPUT DATA No. i

μk(Xik): MF VALUE FOR INPUT DATA FOR INPUT k No. i

Sjk: COORDINATE VALUE OF OUTPUT SINGLETON CORRESPONDING TO MF FOR OUTPUT 1 No. j AND OUTPUT 2 No. k

Wijk: WEIGHT OF $S_{jk}$

Fig.7(a)

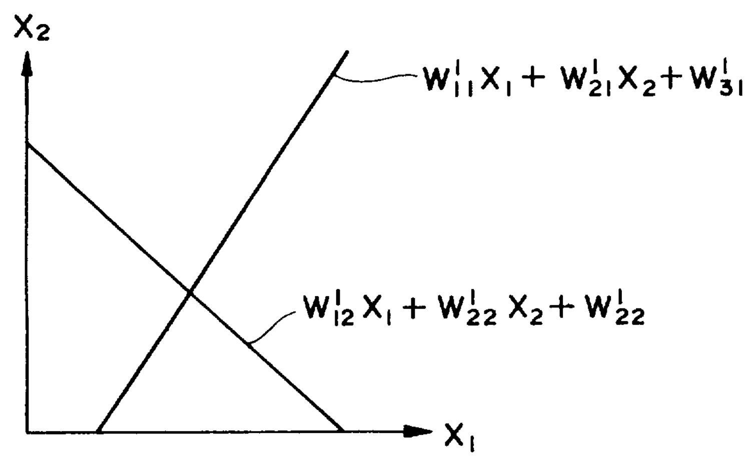


INPUT SPACE DIVIDED AT
MEDIAL LAYER OF NN NEURONS

Fig.7(b)

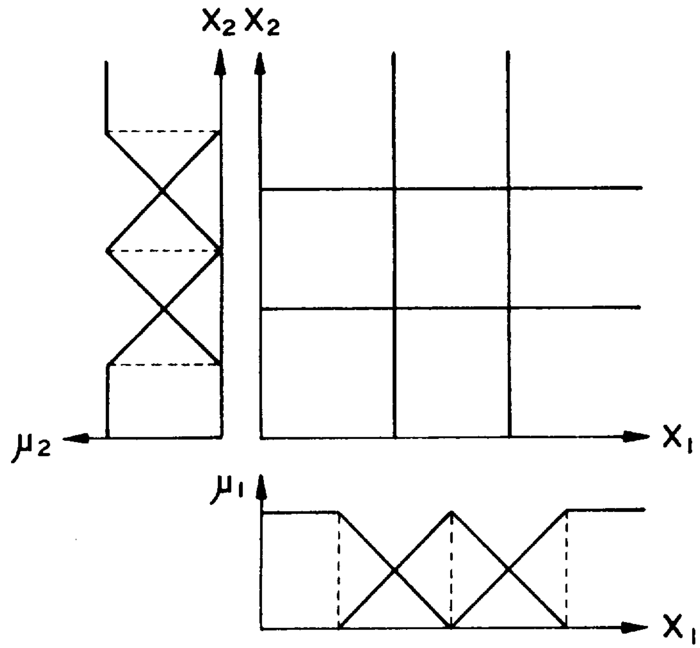


INPUT SPACE DIVIDED ACCORDING TO
MF FOR FUZZY PREMISES

Fig.8(a)

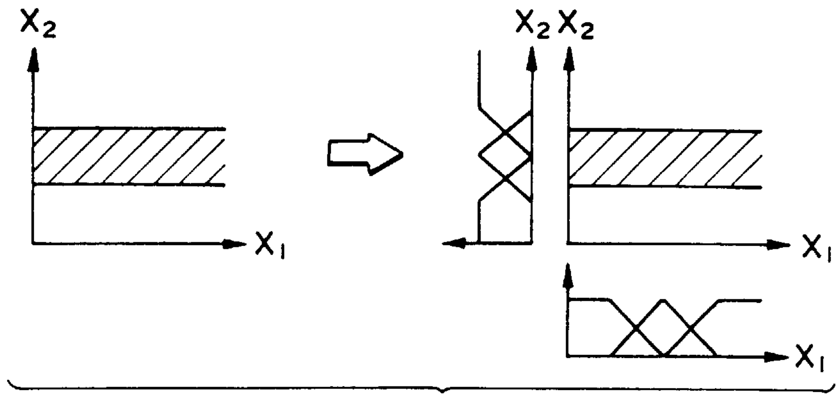


<N N>

WHEN INITIAL VALUE OF MFS EQUALS NUMBER OF MFS NEEDED

Fig.8(b)

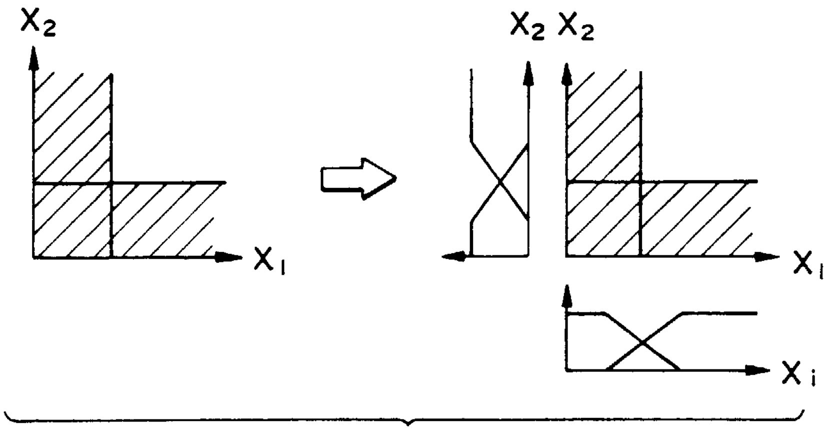


<N N>

WHEN NUMBER OF MFS NEEDED IS LESS THAN INITIAL VALUE SET FOR MFS

Fig. 8(c)

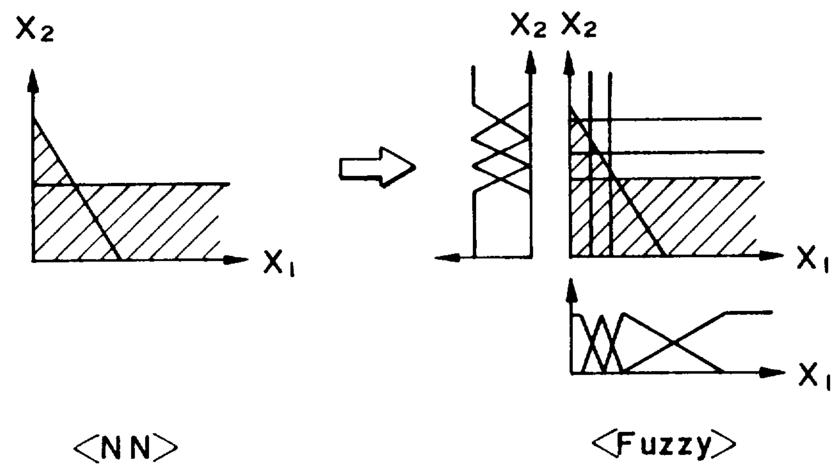


WHEN NUMBER OF MFS NEEDED IS GREATER THAN INITIAL VALUE SET FOR MFS

Fig.8(d)

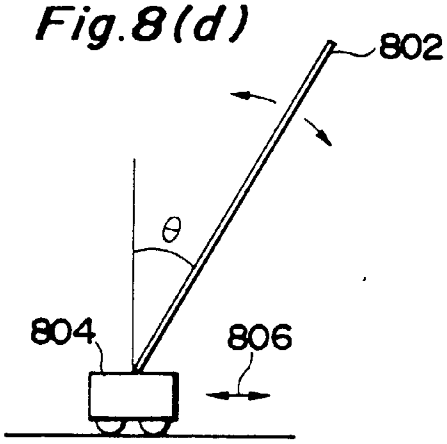
802
θ
804
806

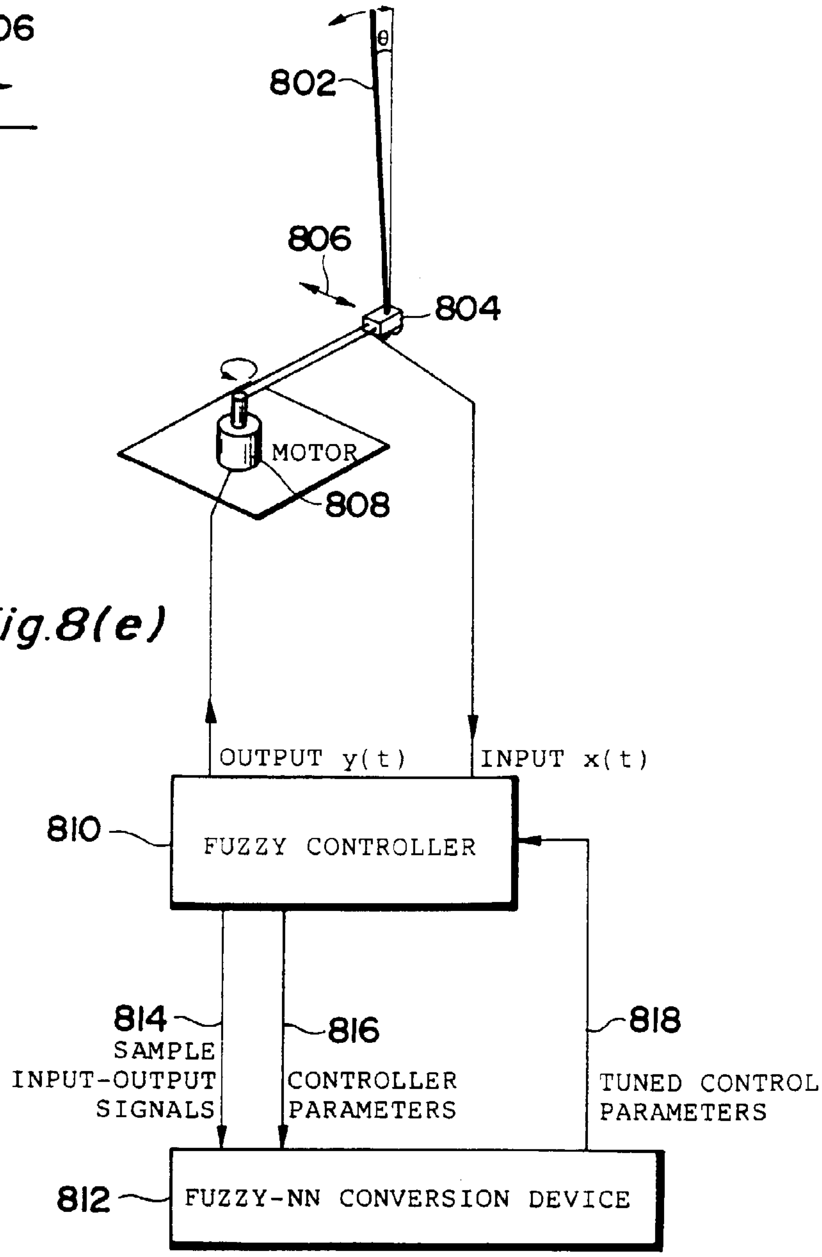
θ
802
806
804
MOTOR
808
OUTPUT y(t)
INPUT x(t)
810
FUZZY CONTROLLER
814
SAMPLE
INPUT-OUTPUT
SIGNALS
816
CONTROLLER
PARAMETERS
818
TUNED CONTROL
PARAMETERS
812
FUZZY-NN CONVERSION DEVICE

Fig.8(e)

*Fig.9*

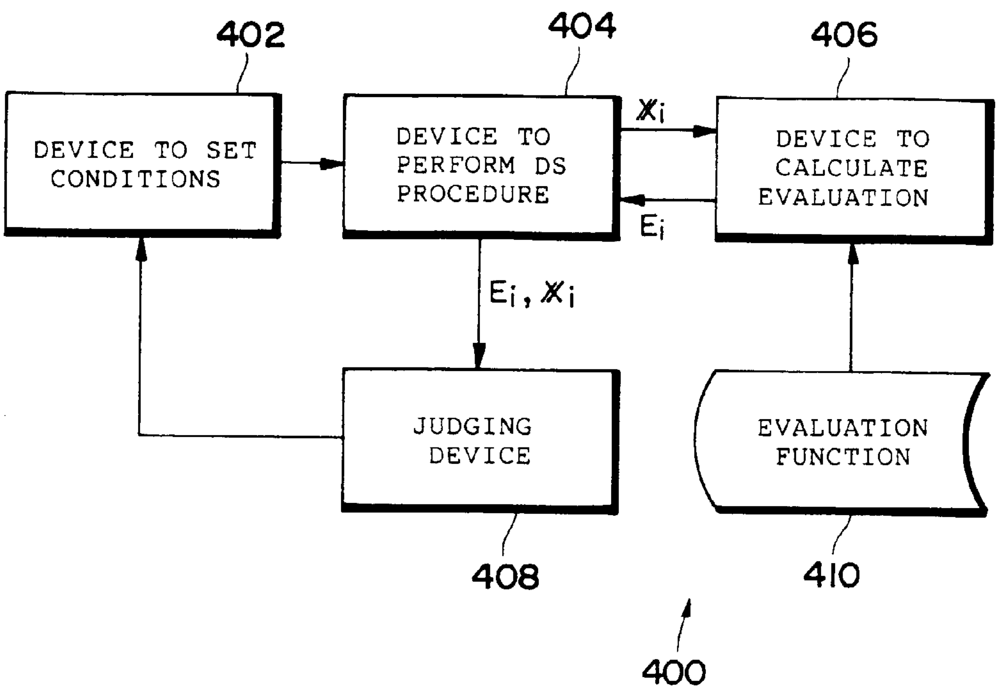


$\mathbf{X}_{\bar{o}i} = (X_{\bar{o}i1}, X_{\bar{o}i2}, ----, X_{\bar{o}im})$ : INITIAL VALUES OF DATA SERIES (No. i)

$\mathbf{X}_i = (X_{i1}, X_{i2}, ----, X_{im})$ : DATA SERIES (No. i)

$E_i$ : EVALUATION VALUE OF DATA SERIES (No. i)

$i = 1, 2, -----, n$ : ORDER OF DATA SERIES

$m = n + 1$

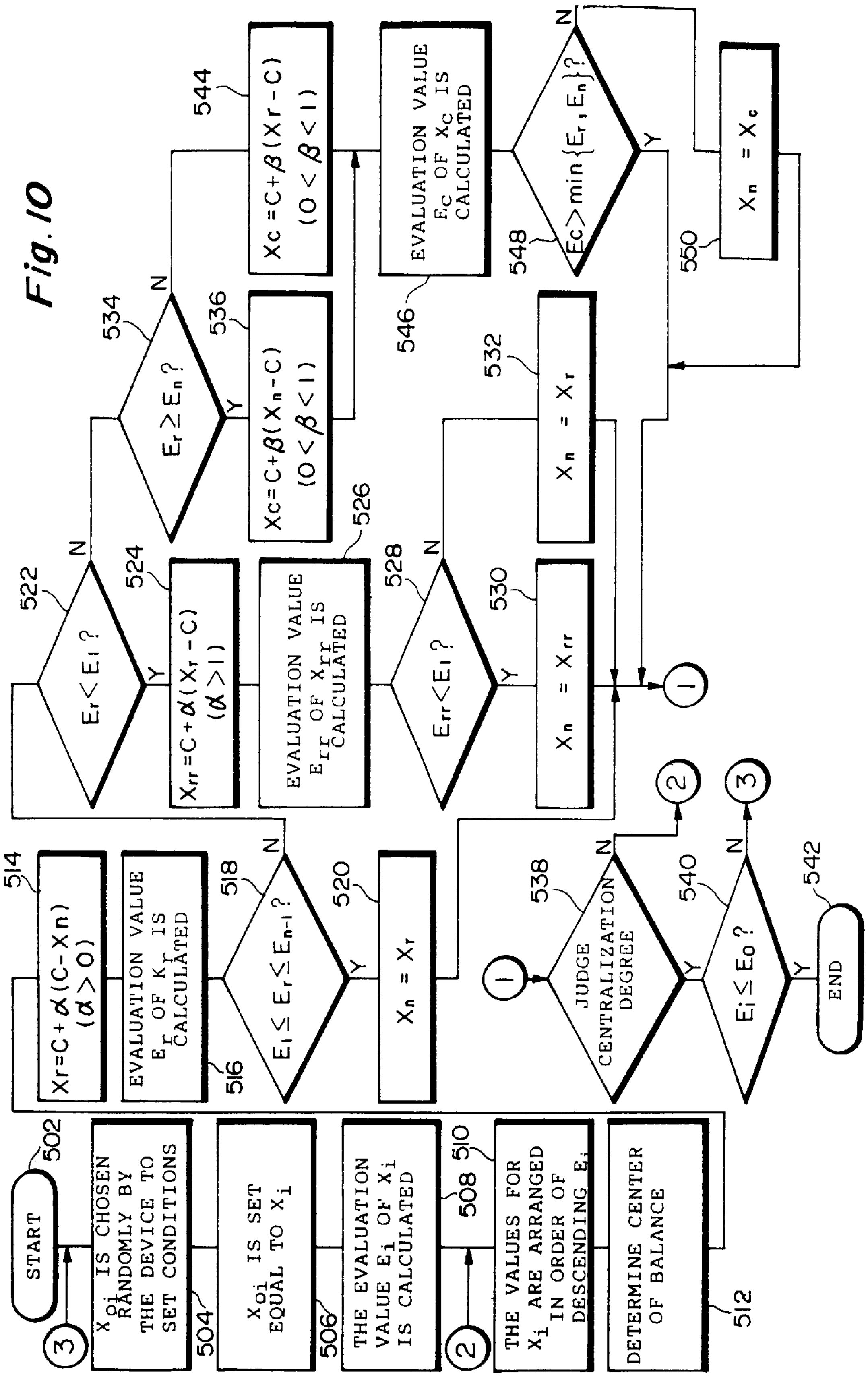
START
502
$X_{oi}$ IS CHOSEN RANDOMLY BY THE DEVICE TO SET CONDITIONS
504
$X_{oi}$ IS SET EQUAL TO $X_i$
506
THE EVALUATION VALUE $E_i$ OF $X_i$ IS CALCULATED
508
510
THE VALUES FOR $X_i$ ARE ARRANGED IN ORDER OF DESCENDING $E_i$
DETERMINE CENTER OF BALANCE
512
514
$Xr=C+\alpha(C-Xn)$ $(\alpha>0)$
EVALUATION VALUE $E_r$ OF $K_r$ IS CALCULATED
516
518
$E_1 \leq E_r \leq E_{n-1}$ ?
520
$X_n = X_r$
522
$E_r < E_1$ ?
524
$X_{rr}=C+\alpha(X_r-C)$ $(\alpha>1)$
526
EVALUATION VALUE $E_{rr}$ OF $X_{rr}$ IS CALCULATED
528
$E_{rr} < E_1$ ?
530
$X_n = X_{rr}$
534
$E_r \geq E_n$ ?
536
$Xc=C+\beta(X_n-C)$ $(0<\beta<1)$
532
$X_n = X_r$
544
$Xc=C+\beta(Xr-C)$ $(0<\beta<1)$
546
EVALUATION VALUE $E_c$ OF $X_c$ IS CALCULATED
548
$E_c > \min\{E_r, E_n\}$ ?
550
$X_n = X_c$
538
JUDGE CENTRALIZATION DEGREE
540
$E_i \leq E_0$ ?
542
END
Y
N
1
2
3
Fig.10

Fig. 11

| | | | | | |
|---|---|---|---|---|---|
| NUMBER OF DATA SERIES | n | | | | |
| NUMBER OF DATA IN EACH | m | | | | |
| ARRANGEMENT OF THE DATA SERIES | DATA SERIES 1 | $X_{11}$ | $X_{12}$ | .... | $X_{1m}$ |
| | EVALUATION VALUE 1 | $E_1$ | | | |
| | DATA SERIES 2 | $X_{21}$ | $X_{22}$ | .... | $X_{2m}$ |
| | EVALUATION VALUE 2 | $E_2$ | | | |
| | ⋮ | ⋮ | | | |
| | DATA SERIES n | $X_{n1}$ | $X_{n2}$ | .... | $X_{nm}$ |
| | EVALUATION VALUE n | $E_n$ | | | |

*Fig. 12*

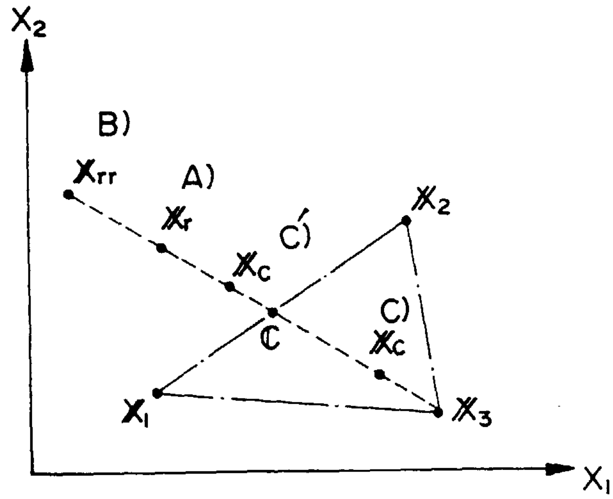


A) (Reflection)
B) (Expansion)
C) C') (Contraction)

$E_1 < E_2 < E_3$